# EUROPEAN PATENT APPLICATION

(11) **EP 4 628 431 A1**
(43) Date of publication of application: **08.10.2025**
(21) Application number: 23909603.5
(22) Date of filing: 31.10.2023
(51) Int. Cl.: B65G 15/12, B65G 47/22, B65G 47/52, G01N 1/02

(54) **SAMPLE CONVEYING SYSTEM**

(30) Priority: 29.12.2022 CN 202211713080
(71) Applicant: Shenzhen Increcare Biotech Co., Ltd, Shenzhen, Guangdong 518055 (CN)
(72) Inventor: HE, Chongdong, Shenzhen, Guangdong 518055 (CN); CHEN, Jianping, Shenzhen, Guangdong 518055 (CN); HE, Taiyun, Shenzhen, Guangdong 518055 (CN); ZHANG, Zhen, Shenzhen, Guangdong 518055 (CN)
(74) Representative: Novagraaf Technologies
(86) International application number: PCT/CN2023/128538
(87) International publication number: WO 2024/139670

(57) **Abstract**

Disclosed is a sample conveying system. The sample conveying system includes a conveying belt, a sample feeding device, and a blocking and limiting mechanism. The conveying belt is suitable to convey a sample rack (100); the sample feeding device is arranged at a side surface of the conveying belt, and is suitable to control a sample feeding speed of the sample rack on the conveying belt; and the blocking and limiting mechanism is arranged at the side surface of the conveying belt, is located upstream and/or downstream of the sample feeding device in a conveying direction of the conveying belt, and is provided with a blocking position for blocking and limiting movement of the sample rack and a releasing position for releasing the sample rack to move. The sample conveying system ensures uninterrupted operation of the sample suction position corresponding to the sample suction device through the sample feeding device and the blocking and limiting mechanism, such that test efficiency is improved.

## Description

The disclosure claims priority and the benefit of the Chinese Patent Application filed with the China National Intellectual Property Administration (CNIPA) on December 29, 2022, with the application number 202211713080.6, entitled "Sample Conveying System", which is herein incorporated by reference in its entirety.

### Technical Field

The disclosure relates to the technical field of sample conveying, and in particular, to a sample conveying system.

### Background

In the field of in vitro diagnostic analysis apparatuses, a sample conveying system is applied to most diagnostic apparatuses (such as a biochemical analyzer, a blood analyzer, a chemiluminescence immunoassay analyzer, a urine analyzer, a microplate reader, and a urine sediment analyzer) for automatically conveying samples.

Samples are usually carried by sample racks and conveyed in batches to a sample suction position where a sample suction device is located by a conveying belt of the sample conveying system, and then are tested and analyzed after being sucked by the sample suction device. However, when too many sample racks enter the sample suction position, a sample rack that does not enter the sample suction position at the front test end is still conveyed towards the sample suction position by the conveying belt. As a result, congestion and collision of the sample racks are caused at the sample suction position, and normal tests and analysis of the samples are affected. Then, the sample rack needs to be stopped from moving in a manual way or by a baffle, and then is released after the sample at the sample suction position is tested. However, in this operation mode, the released sample rack cannot move to the sample suction position in time, the operation of the sample suction position will stop for a while, and the test efficiency will be affected accordingly.

### Summary

In view of that, for solving a technical problem in the related art that test efficiency is affected because a sample rack cannot move to a sample suction position in time after being released when a manual method or a baffle is used to block movement of the sample rack, some embodiments of the disclosure provide a sample conveying system that may control a sample feeding speed of a sample rack and ensure normal test and analysis of samples.

In order to solve the technical solution, an embodiment of the disclosure provides a sample conveying system. The sample conveying system includes a conveying belt, a sample feeding device, and a blocking and limiting mechanism. The conveying belt is configured to convey a sample rack; the sample feeding device is arranged at a side surface of the conveying belt and is configured to control a sample feeding speed of the sample rack on the conveying belt; and the blocking and limiting mechanism is arranged at the side surface of the conveying belt, is located upstream and/or downstream of the sample feeding device in a conveying direction of the conveying belt, and is provided with a blocking position for blocking and limiting movement of the sample rack and a releasing position for releasing the sample rack to move.

In some embodiments of the disclosure, the sample conveying system further includes an automatic track transfer device, the automatic track transfer device includes a track transfer channel and a track transfer driving structure; and there are a plurality of conveying belts; at least two parallel conveying belts are provided, the automatic track transfer device is located at an end of the conveying belt in the conveying direction of the conveying belt, and the track transfer channel is driven by the track transfer driving structure so as to adaptively communicate with different conveying belts of the plurality of conveying belts.

In some embodiments of the disclosure, the sample conveying system further includes a machine frame and a baffle, a plurality of baffles are provided; the plurality of baffles are connected to the machine frame, are located on two sides of the conveying belt, and define, with the conveying belt, a conveying guide recess having an upward opening; the sample feeding device and the blocking and limiting mechanism are arranged on the machine frame, and are located outside the conveying guide recess.

In some embodiments of the disclosure, a limiting opening is provided in the baffle, and the blocking and limiting mechanism includes: a mounting frame, a limiting driving assembly, and a limiting baffle, the mounting frame is arranged on the machine frame and is located outside the conveying guide recess; the limiting driving assembly is arranged on the mounting frame; and one end of the limiting baffle is rotatably connected to the mounting frame, the other end of the limiting baffle is provided with a blocking position that penetrates the limiting opening to block and limit the movement of the sample rack, and a releasing position that withdraws from the limiting opening to release the sample rack to move, and the limiting driving assembly is in transmission connection to the limiting baffle, so as to drive the limiting baffle to rotate around a connection point between the limiting baffle and the mounting frame.

In some embodiments of the disclosure, at least one conveying belt of the plurality of conveying belts is a sample-sucking conveying belt, and the sample-sucking conveying belt is sequentially provided with a first temporary storage area and a sample suction area in the conveying direction; a position, corresponding to a sample suction device, in the sample suction area is a sample suction position, and the first temporary storage area is arranged at a side farthest away from the automatic track transfer device; a first sample rack detection switch is arranged in the first temporary storage area, the blocking and limiting mechanism is provided with a first blocking and limiting mechanism, and the first blocking and limiting mechanism is arranged between the first temporary storage area and the sample suction area; and a second sample rack detection switch is arranged in the sample suction area, and a sample feeding device is arranged at a side surface of the sample suction area; when the first sample rack detection switch is triggered, and the second sample rack detection switch is not triggered, the first blocking and limiting mechanism is in the releasing position; when the first sample rack detection switch is not triggered, and the second sample rack detection switch is triggered, the first blocking and limiting mechanism is in the blocking position; and when the second sample rack detection switch is triggered, the sample feeding device controls a plurality of sample positions on the sample rack to pass through the sample suction position progressively or intermittently.

In some embodiments of the disclosure, the sample-sucking conveying belt is further provided with a second temporary storage area, the second temporary storage area is arranged between the sample suction area and the automatic track transfer device, a third sample rack detection switch is arranged in the second temporary storage area, the blocking and limiting mechanism is a second blocking and limiting mechanism, and the second blocking and limiting mechanism is arranged between the sample suction area and the second temporary storage area; after all the plurality of sample positions pass through the sample suction position, and when the third sample rack detection switch is not triggered, the sample feeding device releases the sample rack; and after all the plurality of sample positions pass through the sample suction position, and when the third sample rack detection switch is triggered, the sample feeding device controls the sample rack to wait in the sample suction area.

In some embodiments of the disclosure, a track transfer detection switch is arranged on the track transfer channel; when the third sample rack detection switch is triggered, and the track transfer channel does not communicate with the sample-sucking conveying belt, and/or when the track transfer detection switch is triggered, the second blocking and limiting mechanism is in the blocking position; and when the third sample rack detection switch is triggered, the track transfer channel communicates with the sample-sucking conveying belt, and the track transfer detection switch is not triggered, the second blocking and limiting mechanism is in the releasing position.

In some embodiments of the disclosure, a blocking mechanism is arranged at an end, farthest away from the conveying belt, of the track transfer channel, and is configured to block the end, farthest away from the conveying belt, of the track transfer channel; when the track transfer channel communicates with the sample-sucking conveying belt, the blocking mechanism blocks the end, farthest away from the conveying belt, of the track transfer channel.

In some embodiments of the disclosure, at least two sample-sucking conveying belts are provided; when the track transfer channel moves to communicate with a targeted sample-sucking conveying belt of at least two sample-sucking conveying belts (201), and the track transfer detection switch is triggered, the second blocking and limiting mechanism of the targeted sample-sucking conveying belt is in the releasing position in response to the third sample rack detection switch of the targeted sample-sucking conveying belt is not triggered, and the second blocking and limiting mechanism of the targeted sample-sucking conveying belt is in the blocking position in response to the third sample rack detection switch of the targeted sample-sucking conveying belt is triggered.

In some embodiments of the disclosure, a first limiting elongated hole extending in the conveying direction of the sample-sucking conveying belt is provided in the baffle at a side portion of the sample-sucking conveying belt, and the sample feeding device includes: a base, a linear driving mechanism, and a material-pushing shift piece mechanism, the base is arranged on the machine frame and is located outside the conveying guide recess defined by the sample-sucking conveying belt; the linear driving mechanism is arranged on the base; and the material-pushing shift piece mechanism is configured to penetrate the first limiting elongated hole so as to abut against the sample rack, and the linear driving mechanism is in transmission connection to the material-pushing shift piece mechanism, so as to drive the material-pushing shift piece mechanism to reciprocate in the conveying direction of the conveying belt.

In some embodiments of the disclosure, two sample-sucking conveying belts are provided, and conveying directions of the two sample-sucking conveying belts are identical.

In some embodiments of the disclosure, at least one conveying belt of the plurality of conveying belts is a return conveying belt, a conveying direction of the return conveying belt is opposite to the conveying direction of the sample-sucking conveying belt, and an end, closest to the automatic track transfer device, of the return conveying belt is provided with a fourth sample rack detection switch; the track transfer channel communicates with the return conveying belt, and when the fourth sample rack detection switch is triggered, and the track transfer detection switch is not triggered, the track transfer channel returns and moves back to an initial position.

In some embodiments of the disclosure, a second limiting elongated hole extending in the conveying direction of the return conveying belt is provided in the baffle, an end, farthest away from the automatic track transfer device, of the return conveying belt is provided with a blocking and propelling device, and the blocking and propelling device includes: a blocking and propelling seat, a blocking and driving mechanism, and a blocking and propelling plate, the blocking and propelling seat is arranged on the machine frame, and is located outside the conveying guide recess defined by the return conveying belt; the blocking and driving mechanism is arranged on the blocking and propelling seat; and one end of the blocking and propelling plate is movably connected to the blocking and propelling seat, the other end of the blocking and propelling plate is provided with a blocking and propelling position penetrating the second limiting elongated hole and arranged on the return conveying belt, and a separation position far away from the return conveying belt, and the blocking and driving mechanism is in transmission connection to the blocking and propelling plate, so as to drive the blocking and propelling plate to reciprocate in the conveying direction of the return conveying belt.

In some embodiments of the disclosure, a fifth sample rack detection switch and a third blocking and limiting mechanism are arranged between the blocking and propelling device and the fourth sample rack detection switch, and the fifth sample rack detection switch is arranged close to the blocking and propelling device; when the fourth sample rack detection switch is triggered, the fifth sample rack detection switch is not triggered, and the blocking and propelling device is in the blocking and propelling position, the third blocking and limiting mechanism is in the releasing position; and when the fifth sample rack detection switch is triggered, in response to a downstream unit connected to the return conveying belt does not communicate with the return conveying belt, the blocking and propelling plate is in the blocking and propelling position so as to block a moving front end of the sample rack; and when the fifth sample rack detection switch is triggered, in response to a downstream unit connected to the return conveying belt communicates with the return conveying belt in place, the blocking and propelling plate is in the separation position for preset time at first, and then the blocking and propelling plate is in the blocking and propelling position and propels the sample rack to a moving tail end.

The technical solution of the disclosure has the following advantages:
The sample conveying system provided by the disclosure includes the sample feeding device that is arranged at the side surface of the conveying belt and is configured to control the sample feeding speed of the sample rack on the conveying belt. Thus, entry of too many sample racks into the sample suction position corresponding to the sample suction device due to an excessive high sample feeding speed may be avoided. Further, the sample rack may keep being moved and fed towards the sample suction position, thus guaranteeing uninterrupted operation at the sample suction position, and improving the test efficiency. The sample conveying system further includes the blocking and limiting mechanism located upstream and/or downstream of the sample feeding device. When the sample rack entering the sample suction position and/or moving out of the sample suction position needs to be blocked and limited, the sample rack is able to be blocked and limited upstream and/or downstream of the sample feeding device, the sample rack is slowed down, crowded collision of the sample racks at the sample suction position is further avoided, and a moving speed of the sample rack is reduced, such that dropping of the sample from the sample rack due to inertia when the sample feeding speed is suddenly adjusted by the sample feeding device in a case of the excessive conveying speed is avoided, and normal suction, and detection and analysis operation of the sample are guaranteed. When the sample rack needs to be released to pass, the blocking and limiting mechanism does not block the sample rack, and the sample rack is conveyed normally.

### Brief Description of the Drawings

To describe technical solutions in specific embodiments of the disclosure or in the related art more clearly, accompanying drawings required in description of the specific embodiments or in the related art will be described briefly below. Apparently, the accompanying drawings in the following description show some embodiments of the disclosure, and a person of ordinary skill in the art may still derive other accompanying drawings from these accompanying drawings without creative efforts.
Fig. 1 is a schematic diagram of a sample conveying system according to the disclosure;
Fig. 2 is an enlarged view of part A of Fig. 1;
Fig. 3 is an enlarged view of part B of Fig. 1;
Fig. 4 is an enlarged view of part C of Fig. 1;
Fig. 5 is a top view of a sample conveying system according to the disclosure;
Fig. 6 is an enlarged view of part D of Fig. 5;
Fig. 7 is an enlarged view of part E of Fig. 5;
Fig. 8 is a schematic diagram of an automatic track transfer device according to the disclosure;
Fig. 9 is a partial schematic diagram I of an automatic track transfer device according to the disclosure;
Fig. 10 is a partial schematic diagram II of an automatic track transfer device according to the disclosure;
Fig. 11 is a partial schematic diagram III of an automatic track transfer device according to the disclosure;
Fig. 12 is a partial schematic diagram of a sample conveying system according to the disclosure;
Fig. 13 is a schematic diagram of an overall structure of a blocking and limiting mechanism in a blocking position according to the disclosure;
Fig. 14 is a schematic diagram of a split structure of a blocking and limiting mechanism according to the disclosure;
Fig. 15 is a schematic diagram of an overall structure of a blocking and limiting mechanism in a releasing position according to the disclosure;
Fig. 16 is a schematic diagram of an overall structure of a sample feeding device according to the disclosure;
Fig. 17 is a top view of a sample feeding device according to the disclosure;
Fig. 18 is a schematic diagram of a split structure of a sample feeding device according to the disclosure; and
Fig. 19 is a schematic diagram of an exploded structure of a material-pushing shift piece mechanism according to the disclosure.

### Description of reference numerals:

100. sample rack; 201. sample-sucking conveying belt; 202. return conveying belt; 203. automatic track transfer device; 204. machine frame; 205. baffle; 2051. limiting opening; 2052. first limiting elongated hole; 206. first sample rack detection switch; 207. first blocking and limiting mechanism; 208. second sample rack detection switch; 209. second blocking and limiting mechanism; 210. third sample rack detection switch; 211. fourth sample rack detection switch; 212. fifth sample rack detection switch; 213. third blocking and limiting mechanism; 214. sample feeding device; 215. blocking and propelling device; 301. track transfer mounting base plate; 302. track transfer guide rail; 303. track transfer driving structure; 3031. track transfer motor; 3032. track transfer lead screw; 3033. nut detection optocoupler; 3034. bearing; 3035. bearing seat; 304. track transfer channel 305. blocking mechanism; 3051. reversing mounting plate; 3052. reversing blocking piece; 3053. reversing slide way; 3054. reversing slide block; 3055. reversing driving assembly; 30551. commutation motor; 30552. reversing gear; 30553. reversing rack; 306. track transfer slide block; 307. track transfer detection switch; 308. return channel; 309. return support seat; 3010. return resetting structure; 30101. return elastic member; 30102. return baffle; 30103. return slide bar; 3011. return slide block; 401. mounting frame; 4011. side connection portion; 4012. connection plate; 402. limiting driving assembly; 4021. driving portion; 4022. transmission wheel; 4023. follower shaft; 4024. chute; 403. limiting baffle; 4031. blocking piece; 40311. plug-in portion; 4032. limiting swing arm; 4033. rotary shaft; 404. position detection assembly; 4041. first detection switch; 4042. second detection switch; 4043. detection plate; 4044. switch mounting seat; 501. base; 502. linear driving mechanism; 5021. driving portion; 5022. driving pulley; 5023. driven pulley; 5024. transmission belt; 503. material-pushing shift piece mechanism; 5031. bottom plate; 50311. mounting recess; 5032. rotary connection plate; 5033. shift piece; 5034. pressing plate; 5035. elastic resetting member; 5036. rotary shaft; 504. resetting mechanism; 5041. fixed seat; 5042. fixed shaft; 5043. resetting bearing; 505. connection seat; 506. guide structure; 507. detection assembly; 5071. third detection switch; 5072. fourth detection switch; 5073. sample feeding detection plate; 601. blocking and propelling seat; 602. blocking and driving mechanism; and 603. blocking and propelling plate.

### Detailed Description of the Embodiments

In the description of the disclosure, it should be noted that an orientation or positional relation indicated by the terms "center", "up", "down", "left", "right", "vertical", "horizontal", "inside", "outside", etc. is based on the orientation or positional relation shown in the accompanying drawings, is merely used for facilitating the description of the disclosure and simplifying the description, rather than indicating or implying that a device or element referred to should have a particular orientation or be constructed and operated in a particular orientation, and thus cannot be interpreted as limitation to the disclosure. In addition, the terms "first", "second", and "third" are for descriptive purposes merely, and cannot be interpreted as indicating or implying relative importance.

In the description of the disclosure, it should be noted that unless otherwise explicitly specified and defined, the terms such as "mount", "connecting", and "connection" should be understood in a broad sense. In the embodiment, they may denote a fixed connection, a detachable connection or an integrated connection, a mechanical connection or an electric connection, a direct connection or an indirect connection through an intermediate medium, and internal communication of two elements. For those of ordinary skill in the art, specific meanings of the above terms in the disclosure may be understood according to specific circumstances.

In addition, technical features involved in different embodiments of the disclosure described below may be combined with each other as long as there is no conflict.

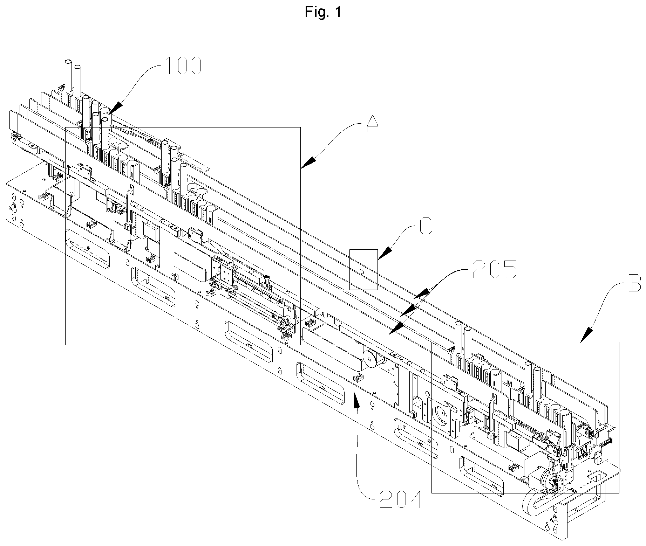

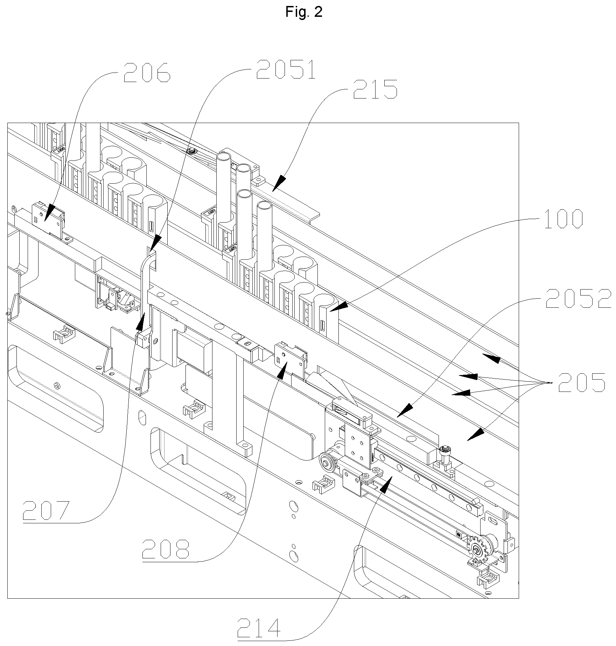

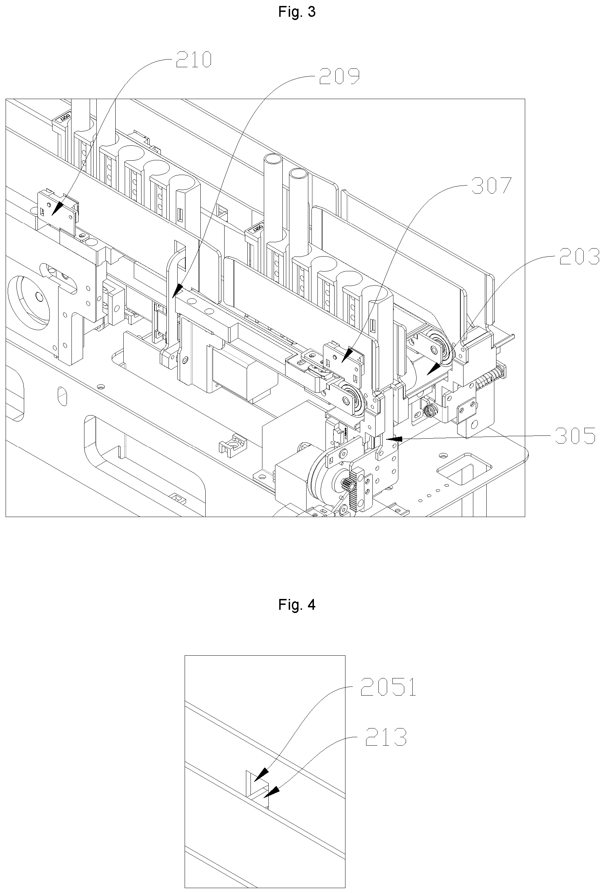

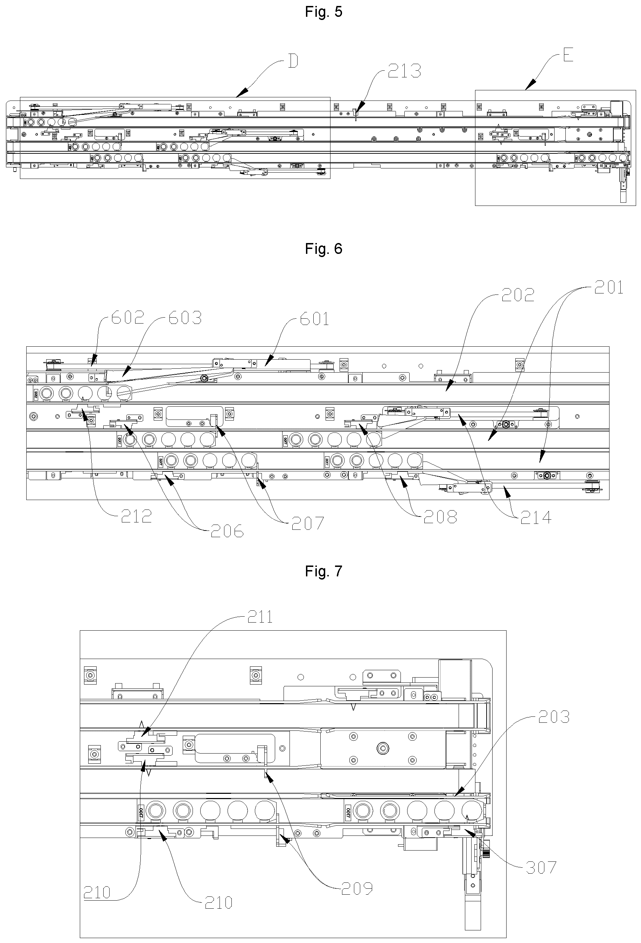

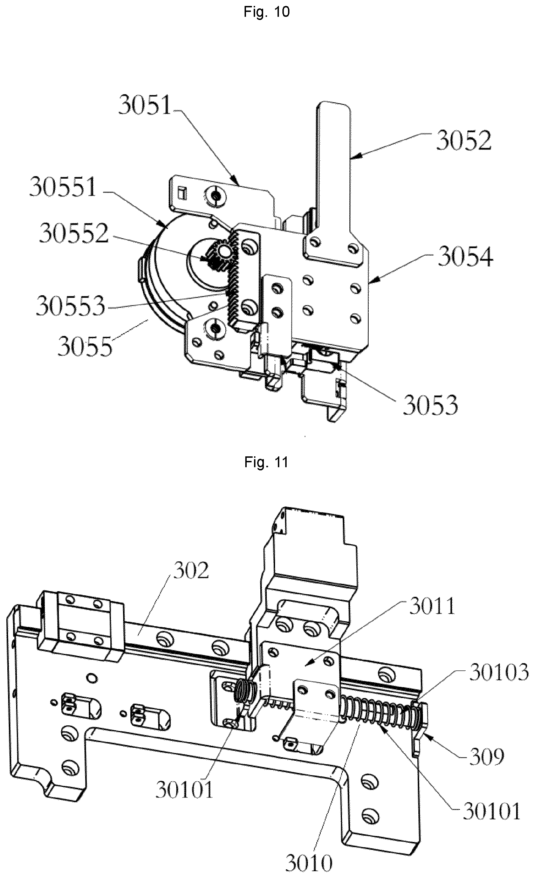

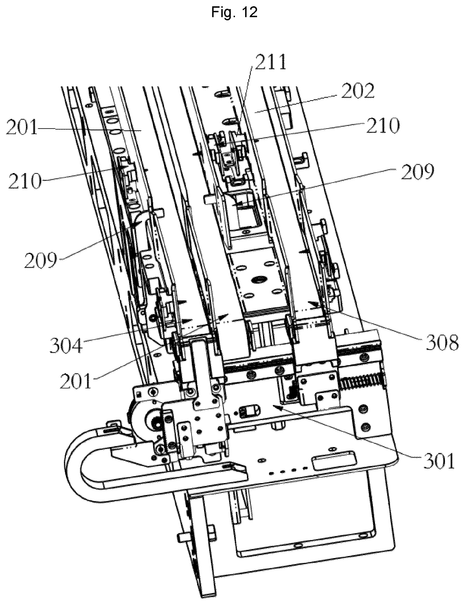

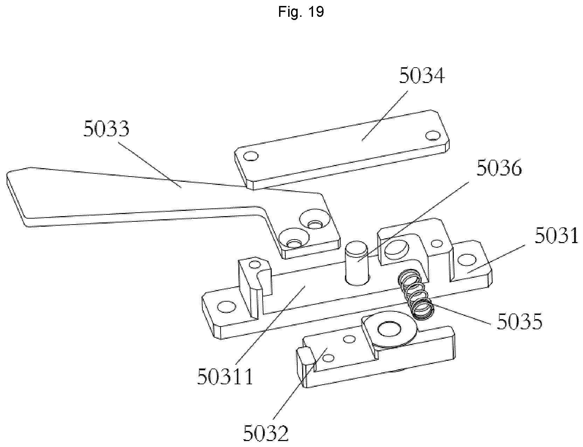

As shown in Fig. 1 to Fig. 19, the embodiment discloses a sample conveying system. The sample conveying system includes a conveying belt, a sample feeding device, and a blocking and limiting mechanism. The conveying belt is configured to convey a sample rack 100. The sample feeding device is arranged at a side surface of the conveying belt, and is configured to control a sample feeding speed of the sample rack 100 on the conveying belt. The blocking and limiting mechanism is arranged at the side surface of the conveying belt, is located upstream and/or downstream of the sample feeding device in a conveying direction of the conveying belt, and is provided with a blocking position for blocking and limiting movement of the sample rack 100 and a releasing position for releasing the sample rack 100 to move.

The sample feeding device is arranged at the side surface of the conveying belt, and is configured to control the sample feeding speed of the sample rack 100 on the conveying belt. Thus, entry of too many sample racks 100 into the sample suction position corresponding to the sample suction device due to an excessive high sample feeding speed may be avoided. Further, the sample rack 100 may be guaranteed to move and be fed towards the sample suction position, thus guaranteeing uninterrupted operation at the sample suction position, and improving the test efficiency. The sample conveying system further includes the blocking and limiting mechanism located upstream and/or downstream of the sample feeding device. When the sample rack 100 entering the sample suction position and/or getting out of the sample suction position needs to be blocked and limited, the sample rack 100 may be blocked and limited upstream and/or downstream of the sample feeding device, the sample rack 100 is slowed down, crowded collision of the sample racks 100 at the sample suction position is further avoided, and a moving speed of the sample rack 100 is reduced, such that dropping of the sample from the sample rack 100 due to inertia when the sample feeding speed is suddenly adjusted by the sample feeding device in a case of the excessive conveying speed is avoided, and normal suction, and detection and analysis operation of the sample are guaranteed. When the sample rack 100 needs to be released to pass, the blocking and limiting mechanism does not block the sample rack 100, and the sample rack 100 is conveyed normally.

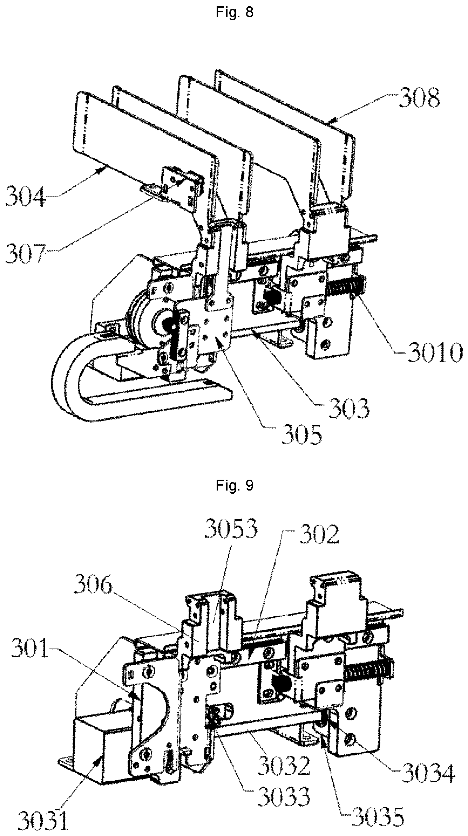

As shown in Fig. 8 to Fig. 12, the sample conveying system of the embodiment further includes an automatic track transfer device 203. The automatic track transfer device 203 includes a track transfer channel 304 and a track transfer driving structure 303. There are a plurality of conveying belts. At least two parallel conveying belts are provided, the automatic track transfer device 203 is located at an end of the conveying belt in the conveying direction of the conveying belt, and the track transfer channel 304 is driven by the track transfer driving structure 303 so as to adaptively communicate with different conveying belts of the plurality of conveying belts. The sample rack 100 is switched among different conveying belts of the plurality of conveying belts by the automatic track transfer device 203, such that test efficiency is improved, a work intensity is reduced, laboratory resources are fully used, and detection cost is reduced.

In the embodiment, the automatic track transfer device 203, the sample feeding device, and the blocking and limiting mechanism are arranged, such that scheduling efficiency of the sample rack 100 among the conveying belts of the plurality of conveying belts is improved, and higher test speeds and different types of tests are satisfied.

The side surface of each conveying belt is provided with one sample feeding device and at least one blocking and limiting mechanism.

The automatic track transfer device 203 according to the embodiment further includes a track transfer mounting base plate 301, a track transfer guide rail 302, and a blocking mechanism 305. The track transfer guide rail 302 is fixedly connected to a mounting base plate, the track transfer driving structure 303 is fixedly connected to the track transfer mounting base plate 301, and the track transfer channel 304 is slidably connected to the track transfer guide rail 302 and is connected to a power output end of the track transfer driving structure 303. Two ends of the track transfer channel 304 include a first end and a second end, and the first end is configured to be matched with different conveying belts of the plurality of conveying belts of the sample conveying system. The blocking mechanism 305 is connected to the track transfer channel 304, and is configured to block the second end of the track transfer channel 304.

The track transfer mounting base plate 301 may be fixedly connected to a machine frame 204 of the sample conveying system or between two sample conveying systems. The track transfer channel 304 may be driven by the track transfer driving structure 303 to slide along the track transfer guide rail 302, so as to match the first end of the track transfer channel 304 with different conveying belts of the plurality of conveying belts of the sample conveying system. The blocking mechanism 305 is configured to block the second end of the track transfer channel 304, such that the sample rack 100 is prevented from derailing from the second end of the track transfer channel 304, or the sample rack 100 is prevented from entering a conveying belt of a next sample conveying system from the track transfer channel 304, and a sample conveying error is prevented. The sample conveying system of the embodiment also automatically switches the conveying belt of the sample rack 100, such that the test efficiency is improved, the work intensity is reduced, the laboratory resources are fully used, and the detection cost is reduced.

In the automatic track transfer device 203 according to the embodiment, the blocking mechanism 305 includes a reversing mounting plate 3051 and a reversing blocking piece 3052. The reversing mounting plate 3051 is fixedly connected to the track transfer channel 304, and the reversing blocking piece 3052 is movably connected to the reversing mounting plate 3051, and is provided with a blocking position for blocking the second end of the track transfer channel 304 and a separation position farthest away from the second end of the track transfer channel 304.

When the track of the sample rack 100 needs to be transferred, the reversing blocking piece 3052 may be moved to the blocking position to block the second end, such that the sample rack 100 entering the track transfer channel 304 is prevented from being separated from the second end or entering the conveying belt of the next sample conveying system from the second end. When the track of the sample rack 100 does not need to be transferred, the reversing blocking piece 3052 may be moved to the separation position to open the second end, such that the reversing blocking piece 3052 does not block the sample rack 100, and the sample rack 100 may be detached and separated from the second end, or enter the conveying belt of the next sample conveying system through the second end.

In the embodiment, the blocking mechanism 305 further includes a reversing slide way 3053, a reversing slide block 3054, and a reversing driving assembly 3055. The reversing slide way 3053 is fixedly arranged on the reversing mounting plate 3051. The reversing slide block 3054 is slidably connected to the reversing slide way 3053, and is fixedly connected to the reversing blocking piece 3052. The reversing driving assembly 3055 is fixedly arranged on the reversing mounting plate 3051, and the power output end is connected to the reversing slide block 3054.

The reversing slide block 3054 is slidably connected to the reversing slide way 3053, so as to slide on the reversing mounting plate 3051, and drive the reversing blocking piece 3052 to slide on the reversing mounting plate 3051. Thus, the reversing blocking piece 3052 is switched between the blocking position and the separation position, the reversing slide way 3053 limits and guides movement of the reversing slide block 3054 and movement of the reversing blocking piece 3052, and the reversing slide block 3054 is driven by the reversing driving assembly 3055 to be freely switched between the blocking position and the separation position.

In the embodiment, a reversing chute 4024 is provided in the reversing slide block 3054, the reversing slide way 3053 is a reversing slide strip protruding from the reversing mounting plate 3051, and the reversing slide block 3054 is in sliding fit with the reversing slide way 3053 through the reversing chute 4024. In an embodiment, the reversing slide strip is a strip structure with a trapezoidal cross section, and the reversing chute 4024 is a dovetail recess matching the reversing slide strip.

In the embodiment, the reversing blocking piece 3052 may be driven by the reversing driving assembly 3055 to be automatically switched between the blocking position and the separation position, or the reversing slide block 3054 and the reversing blocking piece 3052 may be manually adjusted without arranging the reversing driving assembly 3055.

In the sample conveying system of the embodiment, the reversing driving assembly 3055 includes a commutation motor 30551 and a reversing rack 30553. An outer shaft of a power output end of the commutation motor 30551 is provided with a reversing gear 30552. The reversing rack 30553 is arranged on the reversing slide block 3054, and meshes with the reversing gear 30552. The reversing rack 30553 and the reversing gear 30552 are simple in structure and more precise in matching.

In an embodiment, the reversing driving assembly 3055 includes an electric telescopic rod, and the electric telescopic rod is connected to the reversing slide block 3054 and drives the reversing slide block 3054 to slide along the reversing slide way 3053.

The sample conveying system of the embodiment further includes a track transfer slide block 306. The track transfer slide block is slidably connected to the track transfer guide rail 302, and is fixedly connected to the second end of the track transfer channel 304, and the reversing mounting plate 3051. The reversing chute 4024 is provided in the track transfer slide block 306, and the reversing blocking piece 3052 is in sliding fit with the reversing chute 4024.

The track transfer guide rail 302 may limit and guide the movement of the track transfer slide block 306, so as to prevent the track transfer slide block 306 from derailing. The track transfer slide block 306 is fixedly connected to the track transfer channel 304 and the reversing mounting plate 3051, and may drive the track transfer channel 304 and the blocking mechanism 305 to slide along the track transfer guide rail 302. The reversing chute 4024 may limit and guide sliding of the reversing blocking piece 3052, and prevent the reversing blocking piece 3052 from derailing and becoming unblockable.

In the embodiment, the blocking mechanism 305 further includes a reversing detection optocoupler and an optocoupler blocking piece 4031, and the reversing detection optocoupler is used to detect a position of the reversing blocking piece 3052.

In the embodiment, the track transfer driving structure 303 includes a track transfer motor 3031, a track transfer lead screw 3032, and a track transfer nut. The track transfer motor 3031 is fixedly connected to the track transfer mounting base plate 301. One end of the track transfer lead screw 3032 is connected to the power output end of the track transfer motor 3031, and the other end of the track transfer lead screw is connected to a bearing seat 3035 on the track transfer mounting base plate 301 through a bearing 3034. The track transfer nut sleeves a periphery of the track transfer lead screw 3032, and is in threaded connection to the track transfer lead screw 3032, and the track transfer nut is fixedly connected to the track transfer slide block 306.

The track transfer lead screw 3032 is driven by the power output end of the track transfer motor 3031 to rotate. Since the track transfer nut in threaded connected to the track transfer lead screw 3032 is fixedly connected to the track transfer slide block 306, the track transfer nut does not rotate along with the track transfer lead screw 3032. When the track transfer lead screw 3032 rotates, the track transfer nut reciprocates in an axial direction of the track transfer lead screw 3032, so as to adjust a position of the track transfer slide block 306, and further adjust the first end of the track transfer channel 304 to match with different conveying belts. One end of the track transfer lead screw 3032 is connected to the power output end of the track transfer motor 3031, and the other end of the track transfer motor is connected to the bearing seat 3035 through the bearing 3034. Thus, the track transfer lead screw 3032 is supported and fixed, and smooth rotation of the track transfer lead screw 3032 is further guaranteed.

In an embodiment, the track transfer nut is fixedly connected to the track transfer slide block 306 through a nut fixing plate, and the track transfer driving structure 303 further includes a nut detection optocoupler 3033. The nut detection optocoupler is arranged on the nut fixing plate, and is used to detect a position of the track transfer nut.

In an embodiment, the track transfer driving structure 303 may alternatively include the track transfer motor 3031, a driving pulley, a driven pulley, and a chain belt. The driving pulley is arranged on a periphery of the power output shaft of the track transfer motor 3031, and the driven pulley and the driving pulley are arranged at an interval. The chain belt sleeves a periphery of the driving pulley and a periphery of the driven pulley, and meshes with the driving pulley and the driven pulley. The track transfer slide block 306 is fixedly connected to the chain belt, and is driven by the chain belt to move along the track transfer guide rail 302.

The sample conveying system of the embodiment further includes a track transfer detection switch 307. The track transfer detection switch is fixedly connected to the track transfer channel 304, and is used to detect whether the sample rack 100 is guided into the track transfer channel 304, and a position state of the guided sample rack 100. After detecting that the sample rack 100 is guided into the track transfer channel 304 in place, the position of the track transfer slide block 306 may be adjusted by the track transfer driving structure 303, such that the second end may be matched with different conveying belts of the sample conveying system. The track transfer detection switch 307 may be a track transfer detection optocoupler.

The sample conveying system of the embodiment further includes a return channel 308 and a return resetting structure 3010. The return channel 308 is slidably connected to the track transfer guide rail 302, and is arranged in parallel with the track transfer channel 304. The return resetting structure 3010 includes a return elastic member 30101 used to drive the return channel 308 to return to an initial position with which the return conveying belt 202 of the sample conveying system communicates. The return resetting structure 3010 may drive the return channel 308 to return to the initial position under the action of elastic force of the return elastic member 30101. The return channel 308 may be pushed by the track transfer channel 304 to get away from the return conveying belt 202.

The sample conveying system of the embodiment further includes a return slide block 3011, and the return slide block is fixedly connected to the return channel 308, and is slidably connected to the track transfer guide rail 302. The return resetting structure 3010 further includes a return support seat 309, a return baffle 30102, and a return slide bar 30103. The return support seat 309 is fixedly connected to the track transfer mounting base plate 301. The return baffle 30102 is provided with a connection through hole, and the return baffle 30102 is fixedly connected to the return slide block 3011. One end of the return slide bar 30103 is fixedly connected to the return support seat 309, and the other end of the return slide bar is in sliding fit with the connection through hole. The return elastic member 30101 is a return spring, and the return spring sleeves a periphery of the return slide bar 30103, and abuts between the return baffle 30102 and the return support seat 309.

The return slide bar 30103 may limit the return spring, so as to prevent the return spring from skewing and failing to exert power for driving the return channel 308 to return to the original position. The return slide bar 30103 may perform limit through the connection through hole.

In the embodiment, the sample conveying system further includes a return detection optocoupler and a return optocoupler blocking piece 4031, and the return detection optocoupler is used to detect a position state of the return channel 308.

The sample conveying system according to the embodiment includes the automatic track transfer device 203 above, and further includes three conveying belts, that is, a conventional sample-sucking conveying belt 201, an emergency sample-sucking conveying belt 201, and a return conveying belt 202. The track transfer channel 304 of the sample conveying system may be driven by the track transfer driving structure 303 to be matched with different conveying belts, so as to transfer the sample rack 100 from one conveying belt to another conveying belt.

When the sample rack 100 on the conveying belt of the sample conveying system requires for track transfer, a use process of the sample conveying system in the embodiment includes: the track transfer channel 304 is driven by the track transfer driving structure 303 to move to a front of the conveying belt requiring for track transfer, and the first end of the track transfer channel 304 is driven by the track transfer driving structure 303 to correspond to the conveying belt requiring for the track transfer. The reversing blocking piece 3052 of the blocking mechanism 305 is driven by the reversing driving assembly 3055 to move from the separation position to the blocking position. A sample blocking assembly between the conveying belt and the first end of the track transfer channel 304 is put away, and the sample rack 100 may be driven by the conveying belt to be guided into the track transfer channel 304. The track transfer detection switch 307 arranged on the track transfer channel 304 performs in-place detection on a position state of the sample rack 100 guided into the track transfer channel 304. When the track transfer detection switch 307 detects that the sample rack 100 is guided into the track transfer channel 304 in place, the track transfer driving structure 303 drives the track transfer channel 304 to move, then the sample rack 100 in the track transfer channel 304 is driven to move to a front of a targeted conveying belt, and the first end of the track transfer channel 304 is aligned with the targeted conveying belt. The sample rack 100 is driven by the targeted conveying belt to move onto the targeted conveying belt. A corresponding sample rack 100 detection switch on the targeted conveying belt performs in-place detection on the position state of the sample rack 100 in the channel. When the sample rack 100 detection switch detects that the sample rack 100 is in place on the targeted conveying belt, the track transfer driving structure 303 drives the track transfer channel 304 to move to the initial position.

As shown in Fig. 1 to Fig. 7, the sample conveying system disclosed in the embodiment further includes a machine frame 204 and a baffle 205, a plurality of baffles 205 are provided. The plurality of baffles 205 are connected to the machine frame 204, are located on two sides of the conveying belt, and define, with the conveying belt, a conveying guide recess having an upward opening. The sample feeding device and the blocking and limiting mechanism are arranged on the machine frame 204, and are located outside the conveying guide recess.

The baffle 205 may define, together with the conveying belt, the conveying guide recess, and the conveying guide recess may prevent the sample rack 100 from derailing. Further, a structure may be simplified, a size of the sample conveying system may be reduced, and an occupied area may be reduced.

In the embodiment, a limiting opening 2051 is provided in the baffle 205, and the blocking and limiting mechanism includes: a mounting frame 401, a limiting driving assembly 402, and a limiting baffle 403. The mounting frame 401 is arranged on the machine frame 204 and is located outside the conveying guide recess. The limiting driving assembly 402 is arranged on the mounting frame 401. One end of the limiting baffle 403 is rotatably connected to the mounting frame 401, the other end of the limiting baffle is provided with a blocking position that penetrates the limiting opening 2051 to block and limit the movement of the sample rack 100, and a releasing position that withdraws from the limiting opening 2051 to release the sample rack 100 to move, and the limiting driving assembly 402 is in transmission connection to the limiting baffle 403, so as to drive the limiting baffle 403 to rotate around a connection point between the limiting baffle 403 and the mounting frame 401.

When the blocking and limiting mechanism of the embodiment needs to block and limit the sample rack 100, the limiting driving assembly 402 drives the limiting baffle 403 to rotate around the connection point between the limiting baffle 403 and the mounting frame 401 to reach the blocking position, and the limiting baffle 403 abuts against the sample rack 100, such that the sample rack 100 is blocked and limited, the sample rack 100 is slowed down, crowded collision of the sample racks 100 at a detection position is avoided, and normal detection and analysis operation of the sample are guaranteed. When the sample rack 100 needs to be released and pass, the driving assembly drives the limiting baffle 403 to rotate around the connection point between the limiting baffle 403 and the mounting frame 401 to reach the releasing position, the limiting baffle 403 is separated from the sample rack 100, such that the sample rack 100 is released, and the sample rack 100 is guaranteed to be normally conveyed to the detection position. Thus, in the embodiment, the limiting driving assembly 402 may drive the limiting baffle 403 to move so as to block or release the sample rack 100. The operation is simple and labor-saving.

It should be noted that the blocking and limiting mechanism of the embodiment is applied to the field of biochemical detection, and is used to block and limit the sample rack 100 carrying samples. The sample racks 100 are generally conveyed in batches by the conveying belt. The blocking and limiting mechanism is arranged at one side of the conveying belt and in front of the detection position. When blocking and limiting are needed, the blocking and limiting mechanism is turned on, and the limiting baffle 403 is rotated to the conveying belt to abut against and limit the sample rack 100, such that a feeding speed of the sample rack 100 may be reduced, piling-up and collision of the sample racks 100 at the detection position behind are avoided, and orderly detection of the samples is guaranteed. It is clear that in other embodiments, the blocking and limiting mechanism may alternatively be applied to other fields, and may also play a role in blocking and limiting incoming materials, which is not limited to the embodiment.

The mounting frame 401 includes a side connection portion 4011 and a connection plate 4012. The side connection portion 4011 is rotatably connected to the limiting baffle 403, and the connection plate 4012 is connected to the limiting driving assembly 402 and a position detection assembly 404. Thus, connection support for the limiting baffle 403, the limiting driving assembly 402, and the position detection assembly 404 is implemented, and high compactness of a structure is achieved.

In the embodiment, the limiting driving assembly 402 includes a driving portion 4021, a transmission wheel 4022, and a transmission cooperation portion. The driving portion 4021 is arranged on the mounting frame 401, the transmission wheel 4022 is in transmission connection to the driving portion 4021, the transmission cooperation portion is eccentrically arranged with respect to a center of the transmission wheel 4022, and the transmission wheel 4022 is in sliding fit with the limiting baffle 403 through the transmission cooperation portion, such that the limiting baffle 403 may follow the transmission wheel 4022 to rotate clockwise or anticlockwise.

In the embodiment, when the sample rack 100 needs to be blocked and limited, the driving portion 4021 drives the transmission wheel 4022 to rotate forwards, such that the limiting baffle 403 is driven to rotate anticlockwise and the limiting baffle 403 is driven to slide relative to the transmission wheel 4022 until the limiting baffle 403 rotates to the blocking position to block and limit the sample rack 100. When the sample rack 100 needs to be released, the driving portion 4021 drives the transmission wheel 4022 to rotate reversely, such that the limiting baffle 403 is driven to rotate clockwise and the limiting baffle 403 is driven to slide relative to the transmission wheel 4022 until the limiting baffle 403 rotates to the releasing position.

In an embodiment, the driving portion 4021 is a forward-reverse motor fixedly connected to the connection plate 4012 of the mounting frame 401, and an output shaft of the forward-reverse motor penetrates the connection plate 4012. When the forward-reverse motor rotates clockwise, the forward-reverse motor drives the transmission wheel 4022 to rotate forwards, so as to drive the limiting baffle 403 to rotate to the blocking position. When the forward-reverse motor rotates anticlockwise, the forward-reverse motor drives the transmission wheel 4022 to rotate reversely, so as to drive the limiting baffle 403 to rotate to the releasing position.

The transmission wheel 4022 is an eccentric cam, and the eccentric cam is connected to an end, penetrating the connection plate 4012, of the output shaft of the forward-reverse motor through a coupling. In an embodiment, a mounting recess 50311 is provided in a surface, facing away from the driving portion 4021, of the transmission wheel 4022 for the convenience of mounting of the position detection assembly 404.

In the embodiment, the transmission cooperation portion includes a follower shaft 4023 and a chute 4024. One of the follower shaft 4023 and the chute 4024 is eccentrically arranged on the transmission wheel 4022, the other of the follower shaft and the chute is arranged on the limiting baffle 403, and the follower shaft 4023 is slidably inserted into the chute 4024. When the transmission wheel 4022 drives the limiting baffle 403 to rotate, the follower shaft 4023 slides in the chute 4024, so as to facilitate smooth rotation of the limiting baffle 403, and rotation switching between the blocking position and the releasing position. The structure is simple in arrangement, and is reliable in cooperation.

In an embodiment, the follower shaft 4023 is arranged on the transmission wheel 4022, and the chute 4024 is provided in the limiting baffle 403. It can be understood that the chute 4024 is an elongated recess, and a length size determines a rotation amplitude of the limiting baffle 403. Thus, the rotation amplitude of the limiting baffle 403 may be controlled by designing a length of the chute 4024, and desirable controllability is achieved.

In the embodiment, the limiting baffle 403 includes a blocking piece 4031 and a limiting swing arm 4032 that are connected. The blocking piece 4031 and the limiting swing arm 4032 are arranged at an included angle, the chute 4024 is provided in the limiting swing arm 4032, and the limiting swing arm 4032 is rotatably connected to the mounting frame 401. When the limiting baffle 403 moves, one end of the limiting swing arm 4032 rotates around the mounting frame 401, and the other end of the limiting swing arm swings along with the rotation of the transmission wheel 4022 through the follower shaft 4023, such that the blocking piece 4031 is driven to rotate around the connection point between the limiting swing arm 4032 and the mounting frame 401, and switch between the blocking position and the releasing position is completed.

In an embodiment, the blocking piece 4031 and the limiting swing arm 4032 are rotatably connected to the side connection portion 4011 of the mounting frame 401 through a rotary shaft 4033. When the limiting swing arm 4032 swings, the blocking piece 4031 is driven to rotate around the rotary shaft 4033, such that the blocking piece 4031 is switched between the blocking position and the releasing position, and the sample rack 100 is blocked or released.

In an embodiment, an end, farthest away from the limiting swing arm 4032, of the baffle 4031 is provided with a plug-in portion 40311, and two sides of the conveying belt are provided with the baffles 205. An avoidance hole is provided in the baffle 205, and the plug-in portion 40311 is configured to penetrate the avoidance hole to abut against the sample rack 100 on the conveying belt and implement limitation.

In the embodiment, the blocking and limiting mechanism further includes the position detection assembly 404 and a controller. The position detection assembly 404 is arranged on the mounting frame 401 for detecting in-place information of the limiting baffle 403 in the blocking position or the releasing position. The controller is in communication connection to the limiting driving assembly 402 and the position detection assembly 404, so as to control the limiting driving assembly 402 to move according to the in-place information. According to this arrangement, the position detection assembly 404 may detect the in-place information of the limiting baffle 403 in the blocking position or the releasing position, and the controller may determine the position of the limiting baffle 403 according to the in-place information, and then control the limit driving assembly 402 to move. Thus, the limiting baffle 403 is driven to rotate to the blocking position or the releasing position, the sample rack 100 is blocked and limited, the crowded collision of the sample racks 100 in the detected position is avoided, and the normal detection and analysis operation of the samples is guaranteed. When the sample rack 100 needs to be released and pass, the controller controls the limiting driving assembly 402 to move according to the in-place information detected by the position detection assembly 404, so as to drive the limiting baffle 403 to rotate to the releasing position. Thus, the position of the limiting baffle 403 is accurately controlled, with high control precision and automation.

In an embodiment, when the sample rack 100 needs to be blocked and limited, the position detection assembly 404 detects the in-place information of the limiting baffle 403 at first. If it is detected that the limiting baffle 403 is in the blocking position, the controller controls the limit driving assembly 402 not to move, so as to keep the limiting baffle 403 in the blocking position. If it is detected that the limiting baffle 403 is in the releasing position, the controller controls the limiting driving assembly 402 to move, so as to rotate the limiting baffle 403 from the releasing position to the blocking position. When the position detection assembly 404 detects that the limiting baffle 403 rotates to the blocking position, the controller controls the limit driving assembly 402 to stop moving immediately, such that the limiting baffle 403 is accurately located in the blocking position.

When the sample rack 100 needs to be released, the position detection assembly 404 detects the in-place information of the limiting baffle 403 at first. If it is detected that the limiting baffle 403 is in the releasing position, the controller controls the limit driving assembly 402 not to move, so as to keep the limiting baffle 403 in the releasing position. If it is detected that the limiting baffle 403 is in the blocking position, the controller controls the limiting driving assembly 402 to move, so as to rotate the limiting baffle 403 from the blocking position to the releasing position. When the position detection assembly 404 detects that the limiting baffle 403 rotates to the releasing position, the controller controls the limit driving assembly 402 to stop moving immediately, such that the limiting baffle 403 is accurately located in the releasing position.

Thus, the blocking and limiting mechanism of the embodiment may accurately control the movement of the limiting driving assembly 402 through cooperation between the position detection assembly 404 and the controller, thus accurately controlling the position of the limiting baffle 403.

As far as a specific structure of the position detection assembly 404 is concerned, in the embodiment, the position detection assembly 404 includes a first detection switch 4041, a second detection switch 4042, and a detection plate 4043. The first detection switch 4041 and the second detection switch 4042 are arranged on the mounting frame 401, and the first detection switch 4041 and the second detection switch 4042 are in communication connection to the controller. The detection plate 4043 is in transmission connection to the limiting driving assembly 402. The detection plate 4043 corresponds to the first detection switch 4041 when the limiting baffle 403 rotates to the blocking position. The detection plate 4043 corresponds to the second detection switch 4042 when the limiting baffle 403 rotates to the releasing position.

In an embodiment, when the sample rack 100 needs to be blocked and limited, a position of the detection plate 4043 is obtained through the first detection switch 4041 and the second detection switch 4042 at first. If the first detection switch 4041 detects the detection plate 4043, it indicates that the limiting baffle 403 is in the blocking position, and the controller controls the limiting driving assembly 402 not to move. If the second detection switch 4042 detects the detection plate 4043, it indicates that the limiting baffle 403 is in the releasing position, and the controller controls the limiting driving assembly 402 to move, and causes the limiting baffle 403 to rotate from the releasing position to the blocking position. At the same time, the limiting driving assembly 402 drives the detection plate 4043 to move from the second detection switch 4042 to the first detection switch 4041. When the first detection switch 4041 detects information of the detection plate 4043 and determines that the limiting baffle 403 reaches the blocking position, the controller immediately controls the limiting driving assembly 402 to stop moving, such that the limiting baffle 403 accurately stops at the blocking position.

When the sample rack 100 needs to be released, a position of the detection plate 4043 is obtained through the first detection switch 4041 and the second detection switch 4042 at first. If the second detection switch 4042 detects the detection plate 4043, it indicates that the limiting baffle 403 is in the releasing position, and the controller controls the limiting driving assembly 402 not to move. If the first detection switch 4041 detects the detection plate 4043, it indicates that the limiting baffle 403 is in the blocking position, and the controller controls the limiting driving assembly 402 to move, and causes the limiting baffle 403 to rotate from the blocking position to the releasing position. At the same time, the limiting driving assembly 402 drives the detection plate 4043 to move from the first detection switch 4041 to the second detection switch 4042. When the second detection switch 4042 detects information of the detection plate 4043 and determines that the limiting baffle 403 reaches the releasing position, the controller immediately controls the limiting driving assembly 402 to stop moving, such that the limiting baffle 403 accurately stops at the releasing position.

Thus, the first detection switch 4041 feeds back information of the limiting baffle 403 in the blocking position, and the second detection switch 4042 feeds back information of the limiting baffle 403 in the releasing position, such that the controller may accurately control the limiting driving assembly 402 to move according to the position information fed back by the first detection switch 4041 and the second detection switch 4042, so as to implement accurate and automatic control over the limiting baffle 403.

In the embodiment, the first detection switch 4041 and the second detection switch 4042 may be set as detection optocouplers, and the detection plate 4043 is an optocoupler blocking piece 4031. When the optocoupler blocking piece 4031 moves to the detection optocoupler along with the limiting driving assembly 402, the detection optocoupler may be triggered, and the detection optocoupler transmits a signal to the controller, so as to obtain the position information of the limiting baffle 403.

As far as specific mounting is concerned, in the embodiment, the first detection switch 4041 and the second detection switch 4042 are mounted on a switch mounting seat 4044, and the switch mounting seat 4044 is fixedly connected to the connection plate 4012 of the mounting frame 401. The first detection switch 4041 and the second detection switch 4042 may be connected to the switch mounting seat 4044 with bolts or screws, and the switch mounting seat 4044 may be connected to the connection plate 4012 with bolts or screws for the convenience of disassembly and replacement.

The detection plate 4043 is connected to the transmission wheel 4022, and rotates between the first detection switch 4041 and the second detection switch 4042 along with rotation of the transmission wheel 4022. In the embodiment, the detection plate 4043 is fixedly connected to the mounting recess 50311 of the transmission wheel 4022, and the detection plate 4043 is flush with a surface of the drive wheel 4022, such that interfering of the detection plate 4043 in movement of the limiting swing arm 4032 is avoided.

The controller is used to receive a signal of the first detection switch 4041 and a signal of the second detection switch 4042, control the driving portion 4021 to move according to the received signals, further control the transmission wheel 4022 and the limiting baffle 403 to rotate, and accurately controls the position of the limiting baffle 403 accordingly. A structure and a principle of the controller are available in the related art, and will not be repeated in the embodiment.

In order to understand the blocking and limiting mechanism of the embodiment, a control process of the blocking and limiting mechanism is described as follows:
When the sample rack 100 needs to be blocked and limited,
In a first case that if the second detection switch 4042 detects the detection plate 4043, it indicates that the limiting baffle 403 is in the releasing position, and the controller receives the position information of the limiting baffle 403 in the releasing position, and controls the driving portion 4021 to move forwards, and further drives the transmission wheel 4022 to rotate clockwise, so as to drive the limiting baffle 403 to rotate anticlockwise from the releasing position to the blocking position. In addition, the transmission wheel 4022 drives the detection plate 4043 to move from the second detection switch 4042 to the first detection switch 4041. When the first detection switch 4041 detects the information of the detection plate 4043 and determines that the limiting baffle 403 reaches the blocking position, the controller immediately controls the driving portion 4021 to stop moving, such that the limiting baffle 403 accurately stops at the blocking position.

In a second case that if the first detection switch 4041 detects the detection plate 4043, it indicates that the limiting baffle 403 is in the blocking position, and the controller receives the position information of the limiting baffle 403 in the blocking position and controls the driving portion 4021 not to move, so as to keep the limiting baffle 403 in the blocking position.

When the sample rack 100 needs to be released,
In a first case that if the first detection switch 4041 detects the detection plate 4043, it indicates that the limiting baffle 403 is in the blocking position, and the controller receives the position information of the limiting baffle 403 in the blocking position, and controls the driving portion 4021 to move reversely, and further drives the transmission wheel 4022 to rotate anticlockwise, so as to drive the limiting baffle 403 to rotate clockwise from the blocking position to the releasing position. In addition, the transmission wheel 4022 drives the detection plate 4043 to move from the first detection switch 4041 to the second detection switch 4042. When the second detection switch 4042 detects the information of the detection plate 4043 and determines that the limiting baffle 403 reaches the releasing position, the controller immediately controls the driving portion 4021 to stop moving, such that the limiting baffle 403 accurately stops at the releasing position.

In a second case that if the second detection switch 4042 detects the detection plate 4043, it indicates that the limiting baffle 403 is in the releasing position, and the controller receives the position information of the limiting baffle 403 in the releasing position and controls the driving portion 4021 not to move, so as to keep the limiting baffle 403 in the releasing position.

In the blocking and limiting mechanism of the embodiment, the controller may automatically control the limiting driving assembly 402 to move according to the in-place information detected by the position detection assembly 404, accurately control the position of the limiting baffle 403, and block or release the sample rack 100 accordingly. Control precision and automation are high.

In addition, the embodiment further discloses a sample detection device. The sample detection device includes a conveying belt and the blocking and limiting mechanism of the embodiment. The conveying belt is configured to convey a sample rack 100, the blocking and limiting mechanism is arranged on a side surface of the conveying belt, and a limiting baffle 403 abuts against the sample rack 100 when in a blocking position. The sample rack 100 may be blocked or released, and control accuracy and automation are high.

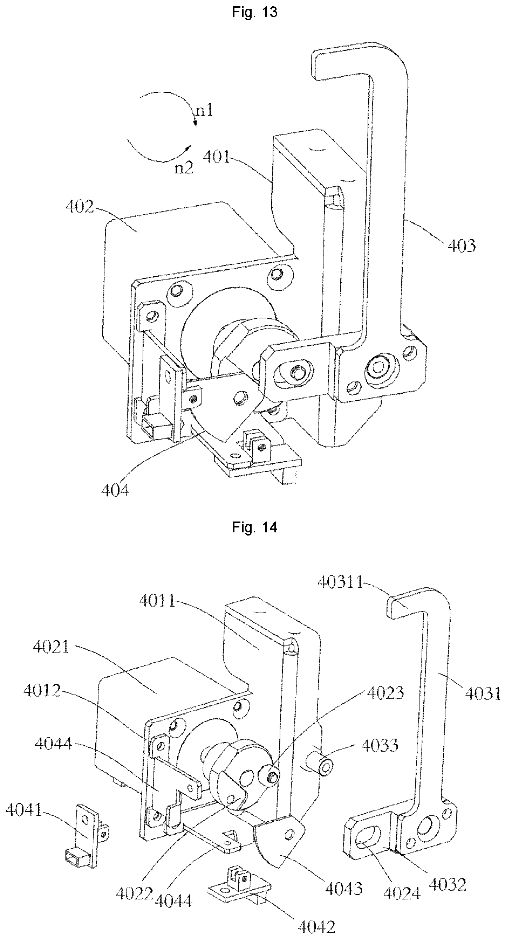

It should be noted that a clockwise direction of the embodiment is a direction indicated by n1 in Fig. 13, and an anticlockwise direction is a direction indicated by n2 in Fig. 13.

It can be understood that the description shows technical solutions of the embodiment. In addition,
In some embodiments, a follower shaft 4023 may be also arranged on a limiting swing arm 4032, a chute 4024 may be provided in a transmission wheel 4022, and the limiting swing arm 4032 may be also in sliding fit with the transmission wheel 4022.

In some embodiments, the limiting driving assembly 402 may also be set as a telescopic cylinder, and the limiting baffle 403 is driven to rotate to the blocking position or a releasing position through stretching out and drawing back of the telescopic cylinder.

In some embodiments, a first detection switch 4041 and a second detection switch 4042 may also be photoelectric sensors or proximity switches, and are not limited to the solution of the embodiment.

As shown in Fig. 1 to Fig. 7, at least one conveying belt of the plurality of conveying belts is a sample-sucking conveying belt 201, and the sample-sucking conveying belt 201 is sequentially provided with a first temporary storage area and a sample suction area in the conveying direction. A position, corresponding to a sample suction device, in the sample suction area is a sample suction position, and the first temporary storage area is arranged at a side farthest away from the automatic track transfer device 203. A first sample rack detection switch 206 is arranged in the first temporary storage area. The blocking and limiting mechanism is provided with a first blocking and limiting mechanism 207, and the first blocking and limiting mechanism 207 is arranged between the first temporary storage area and the sample suction area. A second sample rack detection switch 208 is arranged in the sample suction area, and a sample feeding device 214 is arranged at a side surface of the sample suction area. When the first sample rack detection switch 206 is triggered, and the second sample rack detection switch 208 is not triggered, the first blocking and limiting mechanism 207 is in the releasing position. When the first sample rack detection switch 206 is not triggered, and the second sample rack detection switch 208 is triggered, the first blocking and limiting mechanism 207 is in the blocking position. When the second sample rack detection switch 208 is triggered, the sample feeding device 214 controls a plurality of sample positions on the sample rack 100 to pass through the sample suction position progressively or intermittently.

Through cooperation among the first sample rack detection switch 206, the second sample rack detection switch 208, and the first blocking and limiting mechanism 207, the sample rack 100 may be controlled to move in the first temporary storage area, such that the sample rack 100 is prevented from entering the sample suction area when the sample rack 100 exists in the sample suction area and from colliding with other sample racks 100.

In the embodiment, the sample-sucking conveying belt 201 is further provided with a second temporary storage area, the second temporary storage area is arranged between the sample suction area and the automatic track transfer device 203, a third sample rack detection switch 210 is arranged in the second temporary storage area, and the blocking and limiting mechanism is a second blocking and limiting mechanism 209, the second blocking and limiting mechanism 209 is arranged between the sample suction area and the second temporary storage area. After all the plurality of sample positions pass through the sample suction position, and when the third sample rack detection switch 210 is not triggered, the sample feeding device 214 releases the sample rack 100. After all the plurality of sample positions pass through the sample suction position, and when the third sample rack detection switch 210 is triggered, the sample feeding device 214 controls the sample rack 100 to wait in the sample suction area.

Through cooperation among the second blocking and limiting mechanism 209, the third sample rack detection switch 210, and the sample feeding device 214, movement and a moving speed of the sample rack 100 moved to the second temporary storage area may be controlled, such that a condition that the sample rack 100 derails from the track transfer channel 304 when entering the track transfer channel 304 of the automatic track transfer device 203 at an excessive speed is avoided.

In the embodiment, a track transfer detection switch 307 is arranged on track transfer channel 304. When the third sample rack detection switch 210 is triggered, and the track transfer channel 304 does not communicate with the sample-sucking conveying belt 201, and/or when the track transfer detection switch 307 is triggered, the second blocking and limiting mechanism 209 is in the blocking position. When the third sample rack detection switch 210 is triggered, the track transfer channel 304 communicates with the sample-sucking conveying belt 201, and the track transfer detection switch 307 is not triggered, the second blocking and limiting mechanism 209 is in the releasing position. The condition that the sample rack 100 moves fast to the automatic track transfer device 203 and derails when the track transfer channel 304 does not communicate is prevented.

In the embodiment, a blocking mechanism 305 is arranged at an end, farthest away from the conveying belt, of the track transfer channel 304, and is configured to block the end, farthest away from the conveying belt, of the track transfer channel 304. When the track transfer channel 304 communicates with the sample-sucking conveying belt 201, the blocking mechanism 305 blocks the end, farthest away from the conveying belt, of the track transfer channel 304.

In the embodiment, at least two sample-sucking conveying belts 201 are provided. When the track transfer channel 304 moves to communicate with a targeted sample-sucking conveying belt 201 of at least two sample-sucking conveying belts (201), and the track transfer detection switch 307 is triggered, the second blocking and limiting mechanism 209 of the targeted sample-sucking conveying belt 201 is in the releasing position if the third sample rack detection switch 210 of the targeted sample-sucking conveying belt 201 is not triggered, and the second blocking and limiting mechanism 209 of the targeted sample-sucking conveying belt 201 is in the blocking position if the third sample rack detection switch 210 of the targeted sample-sucking conveying belt 201 is triggered.

As shown in Fig. 1 to Fig. 7 and Fig. 16 to Fig. 19, in the embodiment, a first limiting elongated hole 2052 extending in the conveying direction of the sample-sucking conveying belt 201 is provided in the baffle 205 at a side portion of the sample-sucking conveying belt 201, and the sample feeding device 214 includes: a base 501, a linear driving mechanism 502, and a material-pushing shift piece mechanism 503. The base 501 is arranged on the machine frame 204 and is located outside the conveying guide recess defined by the sample-sucking conveying belt 201. The linear driving mechanism 502 is arranged on the base 501. The material-pushing shift piece mechanism 503 is configured to penetrate the first limiting elongated hole 2052 so as to abut against the sample rack 100, and the linear driving mechanism 502 is in transmission connection to the material-pushing shift piece mechanism 503, so as to drive the material-pushing shift piece mechanism 503 to reciprocate in the conveying direction of the conveying belt.

When in use, the material-pushing shift piece mechanism 503 abuts against the sample rack 100, and the linear driving mechanism 502 drives the material-pushing shift piece mechanism 503 to move in a length direction of the base 501, so as to control a moving sample feeding speed of the sample rack 100. Thus, entry of too many sample racks 100 into the sample suction position due to an excessive high sample feeding speed may be avoided. Further, the sample rack 100 may be guaranteed to move and be fed towards the sample suction position, thus guaranteeing uninterrupted operation at the sample suction position, and improving the test efficiency.

It can be understood that the sample feeding device of the embodiment is applied to the field of biochemical detection, and is used to block and limit the sample rack 100 carrying samples, so as to control the sample feeding speed. Generally, the sample racks 100 are automatically conveyed in batches by the conveying belt, the sample feeding device is arranged at one side of the conveying belt and at the sample suction position, the material-pushing shift piece mechanism 503 abuts against the sample rack 100, and then the material-pushing shift piece mechanism 503 is driven the linear driving mechanism 502 to move. Thus, the sample feeding speed of the sample track 100 may be controlled, the sample feeding speed of the sample track 100 on the conveying belt may be controlled, and orderly detection of the samples is guaranteed. It is clear that in other embodiments, the sample feeding device may alternatively be applied to other fields, and may also play a role in controlling the sample feeding speed of incoming materials, which is not limited to the embodiment.

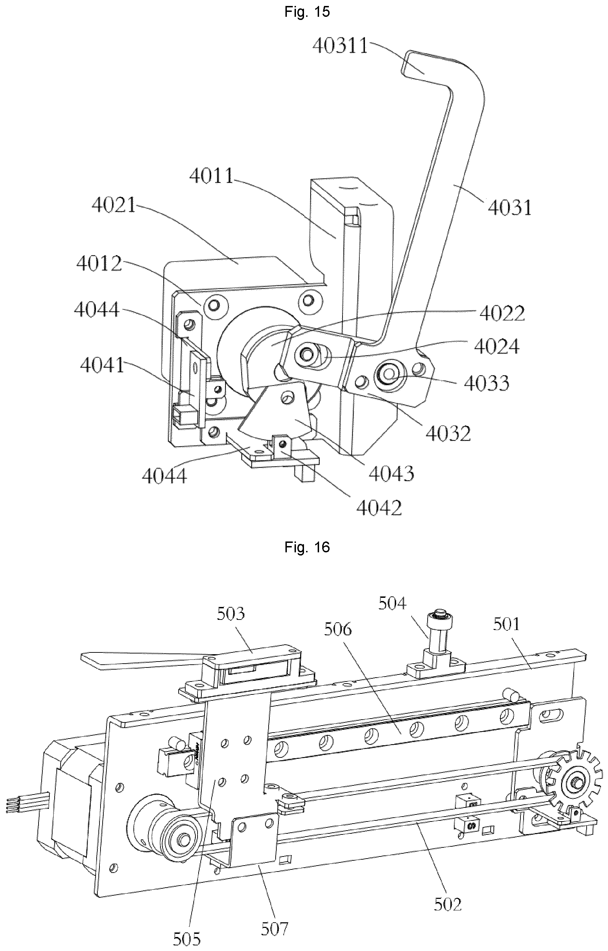

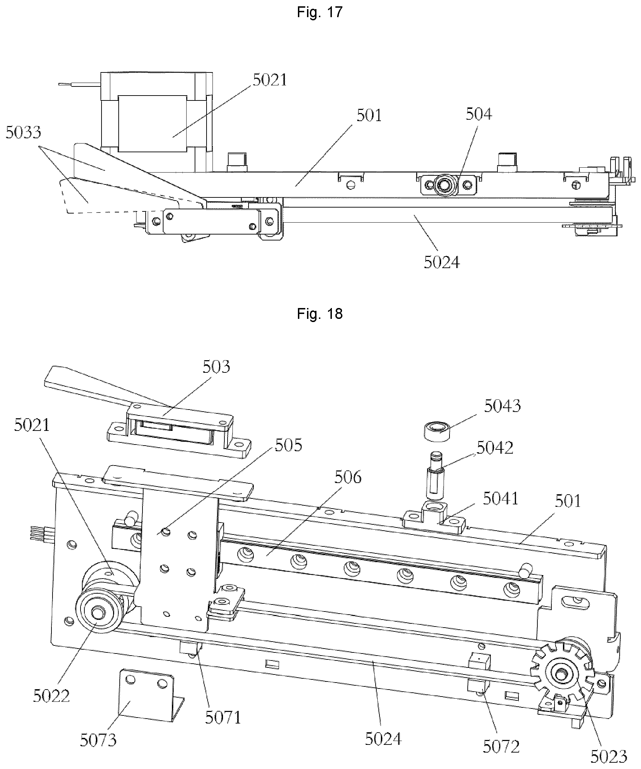

In the embodiment, the base 501 is a rectangular plate, and the rectangular plate is placed horizontally. That is, a length direction of the base 501 coincides with a left-right direction in Fig. 16 or Fig. 17.

In the embodiment, when the linear driving mechanism 502 is turned on intermittently, the material-pushing shift piece mechanism 503 may be driven to move intermittently in the length direction of the base 501, and intermittent/progressive sample feeding of the sample rack 100 is implemented.

In an embodiment, time-based control or distance-based control is employed to turn on linear driving mechanism 502 intermittently. In a case of the time-based control, the linear driving mechanism 502 is turned on and keeps a turned-on state for 5 seconds or 4 seconds, and then turned off and keeps a turned-off state for 5 seconds or 4 seconds, in the embodiment. Thus, the material-pushing shift piece mechanism 503 may move for 5 seconds or 4 seconds, and then stop for 5 seconds or 4 seconds through the alternate operation, and intermittent movement is implemented. In a case of the distance-based control, the linear driving mechanism 502 drives the material-pushing shift piece mechanism 503 to move by 1 meter or 2 meters, then the linear driving mechanism is turned off and keeps a turned-off state for a period of time, and then the linear driving mechanism 502 is turned on to drive the material-pushing shift piece mechanism 503 to move by 1 meter or 2 meters. Thus, the control over the intermittent movement of the material-pushing shift piece mechanism 503 is limited through the alternate operation, and high controllability is achieved.

The linear driving mechanism 502 includes a linear driving portion 5021, a driving pulley 5022, a driven pulley 5023, and a transmission belt 5024. The linear driving portion 5021 is arranged on the base 501, the driving pulley 5022 is rotatably connected to the base 501, the driving pulley 5022 is in transmission connection to the linear driving portion 5021, and the driven pulley 5023 is rotatably connected to the base 501. The driven pulley 5023 and the driving pulley 5022 are separated at an interval in the length direction of the base 501, the transmission belt 5024 sleeves the driving pulley 5022 and the driven pulley 5023, and the transmission belt 5024 is connected to the material-pushing shift piece mechanism 503. When the linear driving portion 5021 is turned on, the linear driving portion 5021 drives the driving pulley 5022 to rotate, the driving pulley 5022 drives the transmission belt 5024 and the driven pulley 5023 to rotate, the transmission belt 5024 drives the material-pushing shift piece mechanism 503 to move in the length direction of the base 501, such that the material-pushing shift piece mechanism 503 is separated from the sample rack 100, the sample rack 100 is avoided and released, and the sample rack 100 may move for sample feeding. When the linear driving portion 5021 does not operate, the material-pushing shift piece mechanism 503 does not move, such that the material-pushing shift piece mechanism 503 abuts against the sample rack 100 again, the sample rack 100 is limited and blocked, and the progressive/intermittent sample feeding of the sample rack 100 is implemented.

In an embodiment, the linear driving portion 5021 is a driving motor, and the driving motor is a forward-reverse motor, and may change a rotation direction. Thus, a rotation direction of the transmission belt 5024 is controlled, a moving direction of the material-pushing shift piece mechanism 503 is controlled, and the material-pushing shift piece mechanism 503 may reciprocate in the length direction of the base 501. The driving pulley 5022 and the driven pulley 5023 are arranged at a left end and a right end of the base 501 respectively.

In the embodiment, the material-pushing shift piece mechanism 503 includes a bottom plate 5031 and a shift piece 5033. The bottom plate 5031 is connected to the linear driving mechanism 502, and the shift piece 5033 is rotatably connected to the bottom plate 5031. The shift piece 5033 may rotate, relative to the bottom plate 5031, to a first position, so as to abut against the sample rack 100. The shift piece 5033 may rotate, relative to the bottom plate 5031, to a second position, so as to avoid and release the sample rack 100.

In an embodiment, when the sample rack 100 needs to be abutted, the shift piece 5033 is turned, the shift piece 5033 rotates towards the first position relative to the bottom plate 5031, such that the shift piece 5033 rotates to the first position to abut against and limit the sample rack 100. When the sample rack 100 needs to be avoided and released, the shift piece 5033 is turned, the shift piece 5033 rotates towards the second position relative to the bottom plate 5031, such that the shift piece 5033 rotates to the second position so as to be separated from the sample rack 100, and avoid and release the sample rack.

In an embodiment, the material-pushing shift piece mechanism 503 further includes a rotary connection plate 5032. The rotary connection plate 5032 is rotatably connected to the bottom plate 5031, and the rotary connection plate 5032 is fixedly connected to the shift piece 5033. Thus, the shift piece 5033 is driven to rotate to the first position or the second position through rotation of the rotary connection plate 5032 relative to the bottom plate 5031.

The bottom plate 5031 is connected to the transmission belt 5024, so as to be driven by the transmission belt 5024 to move. In an embodiment, the mounting recess 50311 is provided in the bottom plate 5031, and the rotary connection plate 5032 is rotatably arranged in the mounting recess 50311. When the shift piece 5033 rotates to the first position, the rotary connection plate 5032 abuts against a side wall of the mounting recess 50311. The mounting recess 50311 is arranged and causes the rotary connection plate 5032 to rotate in the mounting recess 50311. When the shift piece 5033 rotates to the first position, the position of the shift piece 5033 is limited through abutment of the rotary connection plate 5032 against the side wall of the mounting recess 50311, the shift piece 5033 keeps at the first position, and stability of the abutment of the shift piece 5033 against the sample rack 100 is improved.

In an embodiment, the mounting recess 50311 is provided with an opening facing the second position for the convenience of rotation of the rotary connection plate 5032 along the opening, and rotation of the shift piece 5033 to the second position. The mounting recess 50311 is provided with the side wall facing the first position, and the side wall may abut against and limit the rotary connection plate 5032 when the shift piece 5033 rotates to the first position, such that the shift piece 5033 is prevented from rotating when abutting against the sample rack 100.

The material-pushing shift piece mechanism 503 further includes a shift piece rotating shaft 5036. The shift piece rotating shaft 5036 is connected to a rotary plate and the bottom plate 5031, such that the rotary plate rotates around a center of the shift piece rotating shaft 5036.

In addition, the material-pushing shift piece mechanism 503 of the embodiment further includes a pressing plate 5034. The pressing plate 5034 is arranged above the rotary connection plate 5032, and the pressing plate 5034 is connected to the bottom plate 5031, such that the rotary connection plate 5032 is limited between the pressing plate 5034 and the bottom plate 5031, the rotary connection plate 5032 is prevented from moving up and down in a rotating process, and stability of the rotating process is improved.

The material-pushing shift piece mechanism 503 further includes an elastic resetting member 5035. The elastic resetting member 5035 is arranged in the mounting recess 50311, one end of the elastic resetting member 5035 is connected to the side wall of the mounting recess 50311, and the other end of the elastic resetting member 5035 is connected to the rotary connection plate 5032 or the shift piece 5033. In an embodiment, when the plate turning 5033 is turned to drive the rotary connection plate 5032 to rotate to the second position, the elastic resetting member 5035 is compressed or stretched. When external force of the shift piece 5033 disappears, the rotary connection plate 5032 and the shift piece 5033 rotate to the first position and is reset under restoring force of the elastic resetting member 5035, such that with the elastic resetting member 5035, the shift piece 5033 may be quickly reset automatically, and operations are reduced.

In the embodiment, the other end of the elastic resetting member 5035 is connected to the rotary connection plate 5032, and the elastic resetting member 5035 and the shift piece 5033 are arranged at two sides of the shift piece rotating shaft 5036 respectively. When the shift piece 5033 drives the rotary connection plate 5032 to rotate to the second position, the elastic resetting member 5035 is compressed by the rotary connection plate 5032. The elastic resetting member 5035 may be a spring or a leaf spring.

In the embodiment, the sample feeding device further includes a resetting mechanism 504 arranged on the base 501, and the resetting mechanism 504 may be in transmission fit with the shift piece 5033, so as to rotate the shift piece 5033 to the second position. When the sample rack 100 needs to be avoided and released, the transmission belt 5024 drives the material-pushing shift piece mechanism 503 to move to be in abutment fit with the resetting mechanism 504, the resetting mechanism 504 drives the shift piece 5033 to rotate to the second position, such that the sample rack 100 pass advantageously for sample feeding. In addition, the rotary connection plate 5032 compresses the elastic resetting member 5035. When the sample rack 100 needs to be blocked and limited again, the transmission belt 5024 drives the material-pushing shift piece mechanism 503 to move and get separated from the resetting mechanism 504, and the shift piece 5033 rotates to the first position and is reset under the restoring force of the elastic resetting member 5035, so as to block and limit the sample rack 100.

As far as an arrangement position is concerned, in the embodiment, the resetting mechanism 504 is arranged at an end closest to the driven pulley 5023. When the transmission belt 5024 drives the material-pushing shift piece mechanism 503 to move from an end of the driving pulley 5022 to an end of the driven pulley 5023, the shift piece 5033 is located in the first position to abut against and limit the sample rack 100, such that progressive sample feeding is implemented. During this process, the side wall of the mounting recess 50311 limits the shift piece 5033 for ensuring stability. When the material-pushing shift piece mechanism 503 moves to abut against the resetting mechanism 504, the resetting mechanism 504 drives the shift piece 5033 to rotate to the second position, so as to avoid and release the sample rack 100, and allow the sample rack 100 to pass there through. When the material push and plate turning mechanism 503 needs to be reset and moved to one end of the driving pulley 5022, the transmission belt 5024 drives the material push and plate turning mechanism 503 to move from one end of the driven pulley 5023 to one end of the driving pulley 5022, such that the shift piece 5033 is separated from the resetting mechanism 504, the shift piece 5033 is driven by the elastic resetting member 5035 to rotate to the first position, and the material push and plate turning mechanism 503 is reset for preparing for a next round of progressive sample feeding.

As far as a specific structure of the resetting mechanism 504 is concerned, in the embodiment, the resetting mechanism 504 includes a fixed seat 5041 and a resetting bearing 5043. The fixed seat 5041 is arranged on the base 501, a fixed shaft 5042 is arranged on the fixed seat 5041, the resetting bearing 5043 sleeves the fixed shaft 5042, and the resetting bearing 5043 may be in rotational fit with the shift piece 5033. The rotary fit between the resetting bearing 5043 and the shift piece 5033 may drive the shift piece 5033 to rotate to the second position, and the rotary fit further reduces wear between the resetting bearing 5043 and the material-pushing shift piece mechanism 503, and guarantees a service life of the structure.

It can be understood that the sample feeding device of the embodiment further includes a connection seat 505. A bottom of the connection seat 505 is connected to the transmission belt 5024, a top of the connection seat 505 protrudes from the base 501, and the bottom plate 5031 is arranged on the top of the connection seat 505. The connection seat 505 is arranged to connect the material-pushing shift piece mechanism 503 to the transmission belt 5024, and desirable structural stability is achieved.

In an embodiment, the sample feeding device further includes a guide structure 506 arranged in the length direction of the base 501, and the connection seat 505 is slidably connected to the guide structure 506. When the transmission belt 5024 drives the connection seat 505 to move in the length direction of the base 501, the connection seat 505 slides on the guide structure 506 at the same time, such that moving accuracy of the material-pushing shift piece mechanism 503 is guaranteed, the guide structure 506 may further support the material-pushing shift piece mechanism 503, and stress of the transmission belt 5024 may be reduced.

In the embodiment, the guide structure 506 is a guide rail, and the connection seat 505 is slidably mounted on the guide rail. In order to prevent the connection seat 505 from slipping out of the guide rail, in the embodiment, limiting posts are arranged at two ends of the guide rail, and the limiting posts may abut against the connection seat 505. Thus, the connection seat 505 is prevented from slipping out of the guide rail, and safety of use is improved.

It can be understood that the sample feeding device further includes a detection assembly 507 and a controller. The detection assembly 507 is arranged on the base 501 and is used to detect the position information of the material-pushing shift piece mechanism 503. The controller is in communication connection to the linear driving mechanism 502 and the detection assembly 507. The controller is configured to control a movement direction of the linear driving mechanism 502 according to the position information.

In an embodiment, the detection assembly 507 detects the position information of the material-pushing shift piece mechanism 503 and feeds back the position information to the controller, and the controller may control the moving direction of the linear driving mechanism 502 according to the position information. Thus, the moving direction of the material-pushing shift piece mechanism 503 is controlled, and control accuracy and precision of the movement of the material-pushing shift piece mechanism 503 are finally improved.

In an embodiment, the detection assembly 507 includes a third detection switch 5071, a fourth detection switch 5072, and a sample feeding detection plate 5073. The third detection switch 5071 is arranged at one end of the base 501, the fourth detection switch 5072 is arranged at the other end of the base 501, and the fourth detection switch 5072 and the third detection switch 5071 are in communication connection to the controller. The sample feeding detection plate 5073 is in transmission connection to the linear driving mechanism 502. The linear driving mechanism 502 may drive the sample feeding detection plate 5073 to correspond to the third detection switch 5071, such that the controller controls the linear driving mechanism 502 to move forwards. The linear driving mechanism 502 may drive the sample feeding detection plate 5073 to correspond to the fourth detection switch 5072, such that the controller may control the linear driving mechanism 502 to move reversely.

In an embodiment, in a process during which the linear driving mechanism 502 drives the sample feeding detection plate 5073 to move from one end of the base 501 to the other end of the base 501, when the sample feeding detection plate 5073 moves to correspond to the fourth detection switch 5072, the fourth detection switch 5072 transmits detected position information to the controller, and the controller controls the linear driving mechanism 502 to move reversely. In a process during which the linear driving mechanism 502 drives the sample feeding detection plate 5073 to move from the other end of the base 501 to one end of the base 501, when the sample feeding detection plate 5073 moves to correspond to the third detection switch 5071, the third detection switch 5071 transmits detected position information to the controller, and the controller controls the linear driving mechanism 502 to move forwards. Thus, the moving direction of the material-pushing shift piece mechanism 503 is controlled and changed, and high use flexibility is achieved.

In the embodiment, one end of the base 501 is a left end in Fig. 16 or 17, and the other end of the base 501 is a right end in Fig. 16 or 17.

In the embodiment, the third detection switch 5071 is arranged close to the driving pulley 5022, the third detection switch 5071 is arranged close to the driven pulley 5023, the sample feeding detection plate 5073 is in transmission connection to the transmission belt 5024, and the controller is in communication connection to the linear driving portion 5021. In a process during which the linear driving portion 5021 drives the transmission belt 5024 to drive the sample feeding detection plate 5073 to move from the driving pulley 5022 to the driven pulley 5023, when the sample feeding detection plate 5073 corresponds to the fourth detection switch 5072, the fourth detection switch 5072 transmits the detected position information to the controller, and the controller controls the linear driving portion 5021 to rotate reversely, such that the transmission belt 5024 rotates in a reverse direction, and drives the sample feeding detection plate 5073 to move from the driven pulley 5023 to the driving pulley 5022. When the sample feeding detection plate 5073 corresponds to the third detection switch 5071, the third detection switch 5071 transmits the detected position information to the controller, and the controller controls the linear driving portion 5021 to rotate forwards, such that the transmission belt 5024 reverses again and drives the sample feeding detection plate 5073 to move from the driving pulley 5022 to the driven pulley 5023.

In the embodiment, the sample feeding detection plate 5073 is connected and fixed to the transmission belt 5024 through the connection seat 505. Thus, the transmission belt 5024 drives the material-pushing shift piece mechanism 503 and the sample feeding detection plate 5073 to move synchronously in the same direction. That is, when the sample feeding detection plate 5073 corresponds to the third detection switch 5071, the third detection switch 5071 detects that the material-pushing shift piece mechanism 503 moves to a side of the driving pulley 5022. When the sample feeding detection plate 5073 corresponds to the fourth detection switch 5072, the fourth detection switch 5072 detects that the material-pushing shift piece mechanism 503 moves to a side of the driven pulley 5023.

In the embodiment, the third detection switch 5071 and the fourth detection switch 5072 are a detection optocoupler each.

In order to facilitate the understanding of the sample feeding device of the embodiment, an action process is described as follows:
The shift piece 5033 is located in the first position, and the position of the shift piece 5033 is limited through abutment of the rotary connection plate 5032 against the side wall of the mounting recess 50311. When the linear driving portion 5021 does not operate, the material-pushing shift piece mechanism 503 does not move, such that the shift piece 5033 abuts against the sample rack 100 so as to limit and block the sample rack 100. When the linear driving portion 5021 is turned on, the linear driving portion 5021 drives the driving pulley 5022 to rotate, the driving pulley 5022 drives the transmission belt 5024 and the driven pulley 5023 to rotate, and the transmission belt 5024 drives the material-pushing shift piece mechanism 503 and the sample feeding detection plate 5073 to move from one end of the driving pulley 5022 to one end of the driven pulley 5023, such that the shift piece 5033 is separated from the sample rack 100. The sample rack 100 is driven by the conveying belt to move for sample feeding, and the linear driving portion 5021 is controlled to operate intermittently, so as to implement the progressive or the intermittent sample feeding of the sample rack 100. When the material-pushing shift piece mechanism 503 moves to one end of the driven pulley 5023 to be in abutment fit with the resetting mechanism 504, the resetting bearing 5043 presses and pushes the shift piece 5033 and the rotary connection plate 5032 to rotate to the second position relative to the bottom plate 5031, such that the shift piece 5033 rotates away from the sample rack 100, the sample rack 100 is avoided and released, and the sample rack 100 may be moved by the conveying belt for sample feeding. During this process, the elastic resetting member 5035 is compressed. When the sample feeding detection plate 5073 corresponds to the fourth detection switch 5072, the controller controls the linear driving portion 5021 to rotate reversely, such that the transmission belt 5024 rotates reversely, and drives the sample feeding detection plate 5073 and the shift piece 5033 to move together from one end of the driven pulley 5023 to one end of the driving pulley 5022, and the shift piece 5033 is separated from the resetting bearing 5043. The shift piece 5033 is driven by the elastic resetting member 5035 to rotate to the first position until the rotary connection plate 5032 abuts against the side wall of the mounting recess 50311, and the shift piece 5033 may abut against the sample rack 100 inside the base 501. When the sample feeding detection plate 5073 corresponds to the third detection switch 5071, it indicates that the material-pushing shift piece mechanism 503 moves and resets to the original position, and the controller controls the linear driving portion 5021 to rotate forwards, such that a new round of progressive sample feeding of the sample rack 100 may be started.

It is clear that the forward or reverse rotation is two opposite rotation directions, that is, an anticlockwise direction or a clockwise direction, which is not limited in the embodiment.

As shown in Fig. 17, a shift piece 5033 in a solid line position and a shift piece 5033 in a dotted line position are taken as embodiments for description. The first position in the embodiment is the position of the shift piece 5033 in the solid line in Fig. 17, and the second position is the position of the shift piece 5033 in the dotted line in Fig. 17.

The embodiment further discloses a method for controlling the sample feeding device. The method includes:
a linear driving mechanism 502 drives a material-pushing shift piece mechanism 503 to move intermittently in a length direction of a base 501, and the material-pushing shift piece mechanism 503 is caused to intermittently abuts against a sample rack 100.

Thus, the method for controlling the sample feeding device may make the shift piece 5033 abut against the sample rack 100, and limit movement or separation of the sample rack 100, such that the sample rack 100 moves for sample feeding and intermittent abutment is achieved, and the intermittent/progressive sample feeding of the sample rack 100 is implemented. In this way, too many sample racks 100 are prevented from entering into the sample suction position due to a high sample feeding speed, the sample rack 100 may keep moving towards the sample suction position for sample feeding, uninterrupted operation of the sample suction position is guaranteed, and test efficiency is improved.

In an embodiment, the detection assembly 507 detects the position information of the material-pushing shift piece mechanism 503 and feeds back the position information to the controller, and the controller controls the moving direction of the linear driving mechanism 502 according to the position information. Thus, the moving direction of the material-pushing shift piece mechanism 503 is controlled.

A structure of the linear driving mechanism 502, a structure of the material-pushing shift piece mechanism 503, and a structure of the detection assembly 507 have been described in detail above, and will not be repeated herein.

In an embodiment, in a process during which the linear driving mechanism 502 drives the sample feeding detection plate 5073 to move from one end of the base 501 to the other end of the base 501, when the sample feeding detection plate 5073 moves to correspond to the fourth detection switch 5072, the fourth detection switch 5072 transmits detected position information to the controller, and the controller controls the linear driving mechanism 502 to move reversely. In a process during which the linear driving mechanism 502 drives the sample feeding detection plate 5073 to move from the other end of the base 501 to one end of the base 501, when the sample feeding detection plate 5073 moves to correspond to the third detection switch 5071, the third detection switch 5071 transmits detected position information to the controller, and the controller controls the linear driving mechanism 502 to move forwards. Thus, the moving direction of the material-pushing shift piece mechanism 503 is controlled and changed, the material-pushing shift piece mechanism may reciprocate in the length direction of the base 501, and high use flexibility is achieved.

The sample conveying system of the embodiment includes a conveying belt and a sample feeding device of the embodiment. The conveying belt is configured to convey the sample rack 100, the sample feeding device is arranged at a side surface of the conveying belt, and the material-pushing shift piece mechanism 503 may abut against the sample rack 100. The sample conveying system of the embodiment may control the sample feeding speed of the sample rack 100, such that the sample rack 100 may be fed towards the sample suction position while avoiding too many sample racks 100 at the sample suction position, the uninterrupted operation at the sample suction position is guaranteed, and the test efficiency is improved. In the embodiment, two conveying belts are provided, and are an emergency sample-sucking conveying belt 201 and a conventional sample-sucking conveying belt 201, so as to satisfy different detection requirements. Correspondingly, two sample feeding devices are provided, and are arranged at side surfaces of the two conveying belts respectively, so as to abut against and limit the sample racks 100 conveyed on the two conveying belts.

In an embodiment, the sample conveying system is further provided with a sample suction position, and the sample feeding device is arranged at the sample suction position to block and limit the sample rack 100 moving towards the sample suction position, and control the sample feeding speed of the sample rack 100 at the front end entering the sample suction position, such that the sample rack 100 moves to the sample suction position orderly. The sample suction device such as a sampling needle may suck samples from the sample rack 100 abutting against the sample feeding device, and the sample feeding device has a progressive function of the sample rack 100. After the sample suction device such as the sampling needle sucks one sample at a time, the sample feeding device feeds a next sample progressively, such that the sample suction device continuously sucks the sample, the too many sample racks 100 at the sample suction position is avoided, and the orderly detection operation the sample suction position is further guaranteed.

In other embodiments, intermittent movement may also be understood as variable-speed movement of the linear driving portion 5021, that is, alternating fast and slow movement. When the linear driving portion 5021 moves slowly, the material-pushing shift piece mechanism 503 abuts against and limits the sample rack 100. When the linear driving portion 5021 moves fast, the material-pushing shift piece mechanism 503 avoids the sample rack 100 in direction.

It can be understood that the description shows technical solutions of the embodiment. In addition,

In some embodiments, the linear driving mechanism 502 includes a linear driving portion 5021, a driving sprocket, a driven sprocket, and a transmission chain. The linear driving portion 5021 is arranged on the base 501, and the driving sprocket and the driven sprocket are rotatably arranged on the base 501. The driving sprocket is in transmission connection to the linear driving portion 5021, the transmission chain sleeves the driving sprocket and the driven sprocket, and the transmission chain is connected to the material-pushing shift piece mechanism 503 and may also drive the material-pushing shift piece mechanism 503.

In some embodiments, the linear driving mechanism 502 includes a linear driving portion 5021, a gear, and a rack. The linear driving portion 5021 is arranged on the base 501, and the gear is in transmission connection to the linear driving portion 5021. The rack is movably arranged on the base 501, and meshes with the gear. The rack is connected to the material-pushing shift piece mechanism 503, and may also drive the material-pushing shift piece mechanism 503 to move.

In some embodiments, the linear driving mechanism 502 includes a motor and a lead screw. The motor drives the lead screw to rotate, and the lead screw is threadedly connected to the material-pushing shift piece mechanism 503. The material-pushing shift piece mechanism 503 may also be driven to move in an axial direction of the lead screw through rotation of the lead screw.

In some embodiments, the other end of the elastic resetting member 5035 is connected to the shift piece 5033. When the shift piece 5033 drives the rotary connection plate 5032 to rotate to the second position, the elastic resetting member 5035 is stretched or compressed by the shift piece 5033.

In some embodiments, the elastic resetting member 5035 and shift piece 5033 are arranged on a same side of the shift piece rotating shaft 5036. When the shift piece 5033 drives the rotary connection plate 5032 to rotate to the second position, the elastic resetting member 5035 is stretched.

In some embodiments, the resetting bearing 5043 may also be replaced by an idler wheel, and the idler wheel is in rolling fit with the shift piece 5033.

In some embodiments, the guide structure 506 is a guide rod, and the connection seat 505 slidably sleeves the guide rod, such that movement of the connection seat 505 may be guided.

In some embodiments, the sample feeding detection plate 5073 and the connection seat 505 are connected to two sides, in opposite moving directions, of the transmission belt 5024 respectively. That is, the sample feeding detection plate 5073 and the material-pushing shift piece mechanism 503 are driven by the transmission belt 5024 to move in opposite directions. When the sample feeding detection plate 5073 corresponds to the third detection switch 5071, the third detection switch 5071 detects that the material-pushing shift piece mechanism 503 moves to an end of the driven pulley 5023. When the sample feeding detection plate 5073 corresponds to the fourth detection switch 5072, the fourth detection switch 5072 detects that the material-pushing shift piece mechanism 503 moves to an end of the driving pulley 5022.

The third detection switch 5071 and the fourth detection switch 5072 are set as optical sensors or proximity switches.

Two sample-sucking conveying belts 201 are provided, and conveying directions of the two sample-sucking conveying belts 201 are identical. One is the emergency sample-sucking conveying belt 201 and the other is the conventional sample-sucking conveying belt 201. Test efficiency of a rapid test of emergency samples may be improved.

In the embodiment, at least one conveying belt of the plurality of conveying belts is a return conveying belt 202, a conveying direction of the return conveying belt 202 is opposite to the conveying direction of the sample-sucking conveying belt 201, and an end, closest to the automatic track transfer device 203, of the return conveying belt 202 is provided with a fourth sample rack detection switch 211. The track transfer channel 304 communicates with the return conveying belt 202, and when the fourth sample rack detection switch 211 is triggered, and the track transfer detection switch 307 is not triggered, the track transfer channel 304 returns and moves back to an initial position. After the sample rack moves to the return conveying belt 202, the track transfer channel 304 may return to the initial position, and the return channel 308 of the automatic track transfer device 203 is driven by the return resetting structure 3010 to return to the initial position communicating with the return conveying belt 202.

In the embodiment, a second limiting elongated hole extending in the conveying direction of the return conveying belt 202 is provided in the baffle 205, an end, farthest away from the automatic track transfer device 203, of the return conveying belt 202 is provided with a blocking and propelling device 215, and the blocking and propelling device 215 includes: a blocking and propelling seat 601, a blocking and driving mechanism 602, and a blocking and propelling plate 603. The blocking and propelling seat 601 is arranged on the machine frame 204, and is located outside the conveying guide recess defined by the return conveying belt 202. The blocking and driving mechanism 602 is arranged on the blocking and propelling seat 601. One end of the blocking and propelling plate 603 is movably connected to the blocking and propelling seat 601, the other end of the blocking and propelling plate is provided with a blocking and propelling position penetrating the second limiting elongated hole and arranged on the return conveying belt 202, and a separation position far away from the return conveying belt 202, and the blocking and driving mechanism 602 is in transmission connection to the blocking and propelling plate 603, so as to drive the blocking and propelling plate 603 to reciprocate in the conveying direction of the return conveying belt 202.

In the embodiment, a fifth sample rack detection switch 212 and a third blocking and limiting mechanism 213 are arranged between the blocking and propelling device 215 and the fourth sample rack detection switch 211, and the fifth sample rack detection switch 212 is arranged close to the blocking and propelling device 215. When the fourth sample rack detection switch 211 is triggered, the fifth sample rack detection switch 212 is not triggered, and the blocking and propelling device 215 is in the blocking and propelling position, the third blocking and limiting mechanism 213 is in the releasing position. When the fifth sample rack detection switch 212 is triggered, if a downstream unit connected to the return conveying belt 202 does not communicate with the return conveying belt 202, the blocking and propelling plate 603 is in the blocking and propelling position so as to block a moving front end of the sample rack. When the fifth sample rack detection switch 212 is triggered, if a downstream unit connected to the return conveying belt 202 communicates with the return conveying belt 202 in place, the blocking and propelling plate 603 is in the separation position for preset time at first, and then the blocking and propelling plate 603 is in the blocking and propelling position and propels the sample rack 100 to a moving tail end. The blocking and propelling device 215 may block the sample rack 100, and further push the sample rack 100 to the downstream unit.

Apparently, the above embodiments are merely used for clearly describing the instances rather than limiting to the embodiments. Those skilled in the art may further make other modifications or changes in different forms on the basis of the description. It is unnecessary or impossible to enumerate all embodiments herein. Obvious modifications or changes derived from these embodiments should still fall within the protection scope of the disclosure.

## Claims

1. A sample conveying system, comprising:
a conveying belt, wherein the conveying belt is configured to convey a sample rack (100);
a sample feeding device, wherein the sample feeding device is arranged at a side surface of the conveying belt, and is configured to control a sample feeding speed of the sample rack (100) on the conveying belt; and
a blocking and limiting mechanism, wherein the blocking and limiting mechanism is arranged at the side surface of the conveying belt, is located upstream and/or downstream of the sample feeding device in a conveying direction of the conveying belt, and is provided with a blocking position for blocking and limiting movement of the sample rack (100) and a releasing position for releasing the sample rack (100) to move.

2. The sample conveying system according to claim 1, wherein the sample conveying system further comprises an automatic track transfer device (203), the automatic track transfer device (203) comprises a track transfer channel (304) and a track transfer driving structure (303); and
there are a plurality of conveying belts;
at least two parallel conveying belts are provided, the automatic track transfer device (203) is located at an end of the conveying belt in the conveying direction of the conveying belt, and the track transfer channel (304) is driven by the track transfer driving structure (303) so as to adaptively communicate with different conveying belts of the plurality of conveying belts.

3. The sample conveying system according to claim 2, wherein the sample conveying system further comprises:
a machine frame (204); and
a baffle (205), wherein a plurality of baffles (205) are provided, the plurality of baffles (205) are connected to the machine frame (204), are located on two sides of the conveying belt, and define, with the conveying belt, a conveying guide recess having an upward opening; wherein
the sample feeding device and the blocking and limiting mechanism are arranged on the machine frame (204) and are located outside the conveying guide recess.

4. The sample conveying system according to claim 3, wherein a limiting opening (2051) is provided in the baffle (205), and the blocking and limiting mechanism comprises:
a mounting frame (401), wherein the mounting frame (401) is arranged on the machine frame (204) and located outside the conveying guide recess;
a limiting driving assembly (402), wherein the limiting driving assembly (402) is arranged on the mounting frame (401); and
a limiting baffle (403), wherein one end of the limiting baffle (403) is rotatably connected to the mounting frame (401), the other end of the limiting baffle (403) is provided with a blocking position that penetrates the limiting opening (2051) to block and limit the movement of the sample rack (100), and a releasing position that withdraws from the limiting opening (2051) to release the sample rack (100) to move, and the limiting driving assembly (402) is in transmission connection to the limiting baffle (403), so as to drive the limiting baffle (403) to rotate around a connection point between the limiting baffle (403) and the mounting frame (401).

5. The sample conveying system according to claim 3, wherein at least one conveying belt of the plurality of conveying belts is a sample-sucking conveying belt (201), and the sample-sucking conveying belt (201) is sequentially provided with a first temporary storage area and a sample suction area in the conveying direction; a position, corresponding to a sample suction device, in the sample suction area is a sample suction position, and the first temporary storage area is arranged at a side farthest away from the automatic track transfer device (203); a first sample rack detection switch (206) is arranged in the first temporary storage area, the blocking and limiting mechanism is provided with a first blocking and limiting mechanism (207), and the first blocking and limiting mechanism (207) is arranged between the first temporary storage area and the sample suction area; and a second sample rack detection switch (208) is arranged in the sample suction area, and a sample feeding device (214) is arranged at a side surface of the sample suction area;
when the first sample rack detection switch (206) is triggered, and the second sample rack detection switch (208) is not triggered, the first blocking and limiting mechanism (207) is in the releasing position; when the second sample rack detection switch (208) is triggered, the first blocking and limiting mechanism (207) is in the blocking position; and when the second sample rack detection switch (208) is triggered, the sample feeding device (214) controls a plurality of sample positions on the sample rack (100) to pass through the sample suction position progressively or intermittently.

6. The sample conveying system according to claim 5, wherein the sample-sucking conveying belt (201) is further provided with a second temporary storage area, the second temporary storage area is arranged between the sample suction area and the automatic track transfer device (203), a third sample rack detection switch (210) is arranged in the second temporary storage area, the blocking and limiting mechanism is a second blocking and limiting mechanism (209), and the second blocking and limiting mechanism (209) is arranged between the sample suction area and the second temporary storage area; wherein
after all the plurality of sample positions pass through the sample suction position, and when the third sample rack detection switch (210) is not triggered, the sample feeding device (214) releases the sample rack (100); and after all the plurality of sample positions pass through the sample suction position, and when the third sample rack detection switch (210) is triggered, the sample feeding device (214) controls the sample rack (100) to wait in the sample suction area.

7. The sample conveying system according to claim 6, wherein a track transfer detection switch (307) is arranged on the track transfer channel (304); wherein
when the third sample rack detection switch (210) is triggered, and the track transfer channel (304) does not communicate with the sample-sucking conveying belt (201), and/or when the track transfer detection switch (307) is triggered, the second blocking and limiting mechanism (209) is in the blocking position; and when the third sample rack detection switch (210) is triggered, the track transfer channel (304) communicates with the sample-sucking conveying belt (201), and the track transfer detection switch (307) is not triggered, the second blocking and limiting mechanism (209) is in the releasing position.

8. The sample conveying system according to claim 7, wherein a blocking mechanism (305) is arranged at an end, farthest away from the conveying belt, of the track transfer channel (304), and is configured to block the end, farthest away from the conveying belt, of the track transfer channel (304); wherein
when the track transfer channel (304) communicates with the sample-sucking conveying belt (201), the blocking mechanism (305) blocks the end, farthest away from the conveying belt, of the track transfer channel (304).

9. The sample conveying system according to claim 8, wherein at least two sample-sucking conveying belts (201) are provided; wherein
when the track transfer channel (304) moves to communicate with a targeted sample-sucking conveying belt (201) of at least two sample-sucking conveying belts (201), and the track transfer detection switch (307) is triggered, the second blocking and limiting mechanism (209) of the targeted sample-sucking conveying belt (201) is in the releasing position in response to the third sample rack detection switch (210) of the targeted sample-sucking conveying belt (201) is not triggered, and the second blocking and limiting mechanism (209) of the targeted sample-sucking conveying belt (201) is in the blocking position in response to the third sample rack detection switch (210) of the targeted sample-sucking conveying belt (201) is triggered.

10. The sample conveying system according to any one of claims 5 to 9, wherein a first limiting elongated hole (2052) extending in the conveying direction of the sample-sucking conveying belt (201) is provided in the baffle (205) at a side portion of the sample-sucking conveying belt (201), and the sample feeding device (214) comprises:
a base (501) arranged on the machine frame (204) and located outside the conveying guide recess defined by the sample-sucking conveying belt (201);
a linear driving mechanism (502) arranged on the base (501); and
a material-pushing shift piece mechanism (503) configured to penetrate the first limiting elongated hole (2052) so as to abut against the sample rack (100), and the linear driving mechanism (502) is in transmission connection to the material-pushing shift piece mechanism (503), so as to drive the material-pushing shift piece mechanism (503) to reciprocate in the conveying direction of the conveying belt.

11. The sample conveying system according to any one of claims 5 to 9, wherein two sample-sucking conveying belts (201) are provided, and conveying directions of the two sample-sucking conveying belts (201) are identical.

12. The sample conveying system according to any one of claims 7 to 9, wherein at least one conveying belt of the plurality of conveying belts is a return conveying belt (202), a conveying direction of the return conveying belt (202) is opposite to the conveying direction of the sample-sucking conveying belt (201), and an end, closest to the automatic track transfer device (203), of the return conveying belt (202) is provided with a fourth sample rack detection switch (211); wherein
the track transfer channel (304) communicates with the return conveying belt (202), and when the fourth sample rack detection switch (211) is triggered, and the track transfer detection switch (307) is not triggered, the track transfer channel (304) returns and moves back to an initial position.

13. The sample conveying system according to claim 12, wherein a second limiting elongated hole extending in the conveying direction of the return conveying belt (202) is provided in the baffle (205), an end, farthest away from the automatic track transfer device (203), of the return conveying belt (202) is provided with a blocking and propelling device (215), and the blocking and propelling device (215) comprises:
a blocking and propelling seat (601) arranged on the machine frame (204) and located outside the conveying guide recess defined by the return conveying belt (202);
a blocking and driving mechanism (602) arranged on the blocking and propelling seat (601); and
a blocking and propelling plate (603), wherein one end of the blocking and propelling plate (603) is movably connected to the blocking and propelling seat (601), the other end of the blocking and propelling plate (603) is provided with a blocking and propelling position penetrating the second limiting elongated hole and arranged on the return conveying belt (202), and a separation position far away from the return conveying belt (202), and the blocking and driving mechanism (602) is in transmission connection to the blocking and propelling plate (603), so as to drive the blocking and propelling plate (603) to reciprocate in the conveying direction of the return conveying belt (202).

14. The sample conveying system according to claim 13, wherein a fifth sample rack detection switch (212) and a third blocking and limiting mechanism (213) are arranged between the blocking and propelling device (215) and the fourth sample rack detection switch (211), and the fifth sample rack detection switch (212) is arranged close to the blocking and propelling device (215); wherein
when the fourth sample rack detection switch (211) is triggered, the fifth sample rack detection switch (212) is not triggered, and the blocking and propelling device (215) is in the blocking and propelling position, the third blocking and limiting mechanism (213) is in the releasing position; and
when the fifth sample rack detection switch (212) is triggered, in response to a downstream unit connected to the return conveying belt (202) does not communicate with the return conveying belt (202), the blocking and propelling plate (603) is in the blocking and propelling position so as to block a moving front end of the sample rack; and when the fifth sample rack detection switch (212) is triggered, in response to a downstream unit connected to the return conveying belt (202) communicates with the return conveying belt (202) in place, the blocking and propelling plate (603) is in the separation position for preset time at first, and then the blocking and propelling plate (603) is in the blocking and propelling position and propels the sample rack (100) to a moving tail end.
